# EUROPEAN PATENT APPLICATION

(11) **EP 2 196 840 A1**
(43) Date of publication of application: **16.06.2010**
(21) Application number: 08829875.7
(22) Date of filing: 29.08.2008
(51) Int. Cl.: G02B 21/26, G02B 21/36

(54) **MICROSCOPE DEVICE AND PROGRAM**

(30) Priority: 03.09.2007 JP 2007227650
(71) Applicant: Nikon Corporation, Chiyoda-ku Tokyo 100-8331 (JP)
(72) Inventor: SASE, Ichiro, Tokyo 100-8331 (JP)
(74) Representative: Brochard, Pascale
(86) International application number: PCT/JP2008/065584
(87) International publication number: WO 2009/031476

(57) **Abstract**

The present invention relates to a microscope device and a program that allows recording, in a simple manner, the position of a stage for observing a sample in a microscope.

A user operates an operating section (12) to cause a motorized stage (21) to move, and observes and checks an entire sample that is disposed on the motorized stage (21). When the motorized stage (21) is stopped for a predetermined reference time or longer, a controller (13) recognizes the position where the stage is stopped as a position for time-lapse observation, and records as observation position information that observation position. After observation of the entire sample, the controller (13) sequentially moves the motorized stage (21) to the observation positions indicated by the observation position information, on the basis of the recorded observation position information, whereby the user observes the sample at each observation position and decides on a final observation position. The invention can be applied to microscopes.

## Description

### FIELD OF THE INVENTION

The present invention relates to a microscope device and a program, and more particularly, to a microscope device and a program that allow recording, in a simple manner, the positions of a stage for observing a sample in a microscope.

### BACKGROUND ART

Time-lapse observation is a well-known technique in which a glass-bottom dish or a well plate containing a sample to be observed is disposed on the stage of a microscope, and the sample is repeatedly observed over a predetermined interval of time. When a plurality of samples scattered in the container are to be observed by time-lapse observation, a user (observer) finds samples that match the observation purpose while operating the microscope to cause the stage to move, in a preparatory stage of sample observation. The user sequentially registers in the microscope, as observation positions where time-lapse observation is to be carried out, those stage positions at which the stage stands when a desired sample is observed adequately within the field of view of the microscope.

Upon instruction of observation position registration by the user, the microscope sequentially records the instructed observation positions, and, during time-lapse observation, moves the stage sequentially to the registered observation positions, where the samples are imaged by, for instance, an imaging device provided in the microscope.

In the preparatory stage of time-lapse observation in conventional microscopes, a microscope image obtained by imaging the entire sample on the stage is displayed on a monitor, and there is registered a plurality of imaging areas, as designated by the user, on the microscope image (for instance, Patent document 1). During time-lapse observation in such a microscope, the stage is moved so that the registered imaging areas are observed within the field of view, and images in the respective registered imaging areas are captured.

[Patent document 1]
Japanese Patent Application Laid-open No.2002-277754

In the preparatory stage of time-lapse observation in the above-described conventional technique, however, the user must execute a complex operation in order to register observation positions and imaging areas.

Upon observation position registration by the user, for instance, the user has to check visually at high magnifications, one by one, the plural samples in the container, and must select thereafter the samples to be observed, from among the visually checked samples. In such cases, the user operates the microscope with both hands, to check samples that match the observation purpose, for instance, cells that are normal and emit sufficient fluorescent light, while causing the stage to move and while adjusting focus. Once the user has checked the entire sample in the container, he/she causes the stage to move, once again, to positions at which desired samples can be observed appropriately, while readjusting focus, and registers observation positions by taking the hands temporarily off the microscope.

The above is a difficult operation in that the user registers observation positions while checking desired samples visually, with both hands devoted to the operation of the microscope. The operation of registering observation positions can result in loss of time when the samples to be observed must be selected in regions having a field of view size of about 100 magnifications during sample observation. When the samples are cultured cells, in particular, the activity of the cultured cells may drop on account of such a time loss. It would therefore be desirable to shorten the duration of the operation of registering observation positions.

### DISCLOSURE OF THE INVENTION

In the light of the above, it is an object of present invention to allow recording stage positions desired by a user, in a simple manner.

A first microscope device of the present invention comprises an external operating member that enables external operation; movement control means for controlling movement of a stage on which a sample to be observed is disposed, in accordance with a command from the external operating member; acquisition means for monitoring the movement of the stage by the movement control means and for, when the stage moves neither in a first direction nor a second direction perpendicular to the first direction for a reference time or longer, acquiring position information denoting a position at which the stage does not move for the reference time or longer; recording means for recording the acquired position information; and imaging means for carrying out, on the basis of the position information recorded by the recording means, time-lapse imaging through movement of the stage by the movement control means and through repeated imaging of the sample.

A program of the present invention comprises the steps of: controlling movement of a stage, on which a sample to be observed is disposed, in accordance with a command of an external operating member that enables external operation; monitoring the movement of the stage and, when the stage moves neither in a first direction nor a second direction perpendicular to the first direction for a reference time or longer, and acquiring position information denoting a position of the stage that does not move for the reference time or longer; recording the acquired position information; and carrying out, on the basis of the recorded position information, time-lapse imaging through movement of the stage and through repeated imaging of the sample.

A second microscope device of the present invention comprises: an external operating member that enables external operation; movement control means for controlling a scanning member that, through the external operating member, moves an observation region of a sample to be observed; acquisition means for monitoring the movement of the scanning member by the movement control means, and acquiring position information denoting a position of the scanning member when the scanning member does not move for a reference time or longer; recording means for recording the acquired position information; and time-lapse imaging means for carrying out, on the basis of the position information recorded by the recording means, time-lapse imaging through movement of the scanning member by the movement control means and through repeated imaging of the observation region.

The present invention allows recording stage positions desired by a user. In particular, the present invention allows recording stage positions desired by the user in a simple manner.

### BRIEF DESCRIPTION OF THE DRAWINGS

Fig. 1 is a diagram illustrating a configuration example of an embodiment of an observation system in which the present invention is used;
Fig. 2 is a diagram illustrating the outer configuration of a microscope;
Fig. 3 is a diagram illustrating the configuration of a motorized stage;
Fig. 4 is a diagram illustrating the configuration of an operating section;
Fig. 5 is a block diagram illustrating a functional configuration example of a controller;
Fig. 6 is a diagram for explaining observation of an entire sample in a preparatory stage;
Fig. 7 is a diagram for explaining the movement of the field of view of the microscope;
Fig. 8 is a diagram for explaining observation position registration;
Fig. 9 is a diagram for explaining observation position registration;
Fig. 10 is a flowchart for explaining a registration process;
Fig. 11 is a flowchart for explaining an observation position determination process;
Fig. 12 is a diagram for explaining movement of an objective lens;
Fig. 13 is a diagram illustrating an example of a designation screen;
Fig. 14 is a flowchart for explaining a registration process;
Fig. 15 is a flowchart for explaining an observation position determination process;
Fig. 16 is a diagram illustrating the outer configuration of a microscope;
Fig. 17 is a flowchart for explaining an observation position registration process; and
Fig. 18 is a block diagram illustrating a configuration example of a computer.

### DESCRIPTION OF THE REFERENCE NUMERALS

11 microscope, 12 operating section, 13 controller, 14 camera, 15 personal computer, 16 observation monitor, 21 motorized stage, 54 objective lens, 111 joystick, 113 reference time setting knob, 114 stage position reproduction button, 115 confirm button, 141 reference time setting unit, 142 control unit, 143 recording unit, 144 stage control unit, 145 objective lens control unit

### BEST MODE FOR CARRYING OUT THE INVENTION

Embodiments of the present invention are explained below with reference to accompanying drawings.

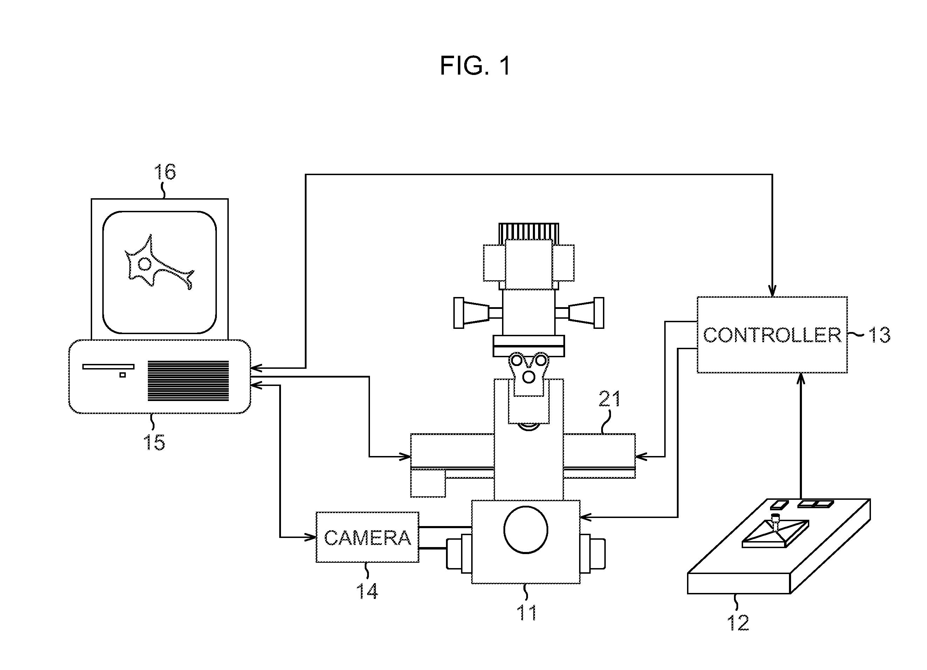

Fig. 1 is a diagram illustrating a configuration example of an embodiment of an observation system in which the present invention is used. The observation system comprises a microscope 11, an operating section 12, a controller 13, a camera 14, a personal computer 15 and an observation monitor 16.

The microscope 11 is provided with a motorized stage 21 that is driven by a stepping motor or the like, not shown. On the motorized stage 21 there is disposed a container, such as a glass-bottom dish or a well plate, that contains a sample to be observed, such as cells or the like. The user operates the operating section 12 to move the motorized stage 21 in such a manner that the sample can be observed appropriately. When the user operates the operating section 12, specifically, the controller 13 controls the movement of the motorized stage 21 on the basis of a signal supplied by the operating section 12 in accordance with the operation by the user.

The camera 14 captures an image of the sample, as an object to be imaged, within the field of view of the microscope 11. The image obtained as a result is supplied to the personal computer 15. The personal computer 15 supplies the image from the camera 14 to the observation monitor 16, where the image is displayed. The user can thus observe the sample within the field of view of the microscope 11 by looking at the image displayed on the observation monitor 16.

As a preparatory stage process of time-lapse observation, for instance, the user operates the operating section 12 while looking at the sample displayed on the observation monitor 16, and observes the entire sample on the motorized stage 21. The controller 13 registers then, as an observation position at which the sample to be observed can be appropriately observed, the position of the motorized stage 21 at which the motorized stage 21 is stopped for a predetermined time or longer, within a period that extends from start to finish of sample checking by the user. Specifically, the controller 13 records, as information indicating a registered observation position, observation position information that denotes the position of the stopped motorized stage 21.

Thereafter, the user operates the operating section 12 to cause the motorized stage 21 to move to a registered observation position, and checks whether the desired sample can be observed appropriately at the registered observation position. In case of a plurality of registered observation positions, the motorized stage 21 moves sequentially to the observation positions in the order they are registered. The user operates the operating section 12 to issue an instruction to the effect that the registered observation position is to be sent as the observation position to which the motorized stage 21 is moved for sample observation during time-lapse observation. In accordance with a signal from the operating section 12, the controller 13 sets the observation positions instructed by the user as observation positions during time-lapse observation, and supplies observation position information of the observation positions to the personal computer 15, to complete thereby the preparation of time-lapse observation.

The personal computer 15 records the observation position information supplied by the controller 13, and performs control for time-lapse observation on the basis of the observation position information. Specifically, the personal computer 15 issues to the controller 13 an instruction to the effect of moving the motorized stage 21 to the registered observation positions, over a predetermined time interval, on the basis of the registered observation position information. In response to the instruction from the personal computer 15, the controller 13 causes the motorized stage 21 to move to the recorded observation positions, and the personal computer 15 records sample images acquired by the camera 14 at the observation positions.

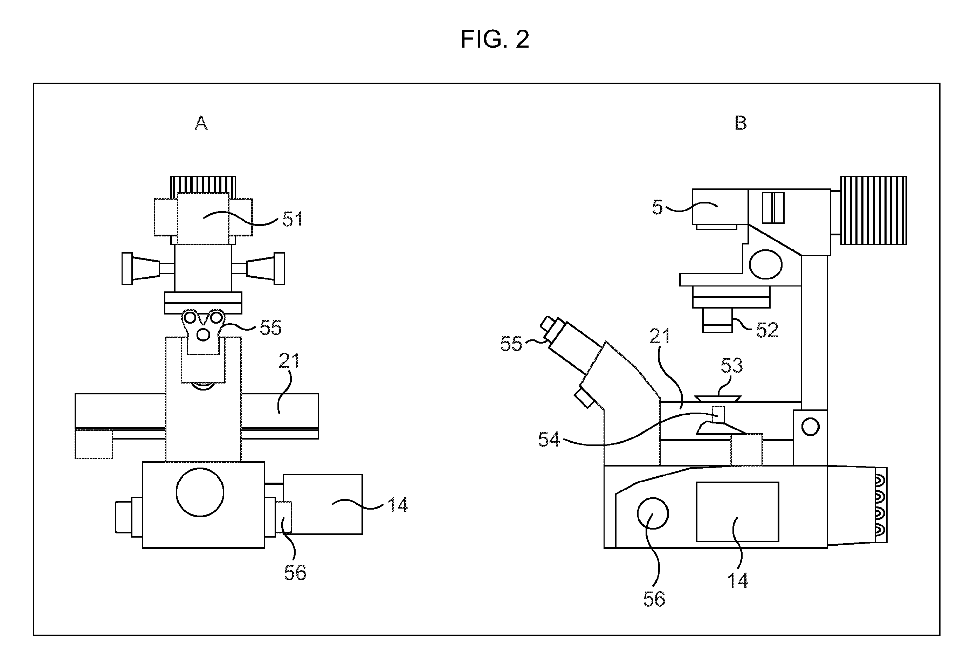

Fig. 2A and Fig. 2B are diagrams illustrating the outer configuration of the microscope 11 of Fig. 1. Fig. 2A illustrates a front-view diagram of the microscope 11, and Fig. 2B illustrates a side-view diagram of the microscope 11. The same reference numerals as in Fig. 1 are used in Fig. 2A and Fig. 2B to denote portions corresponding to those of Fig. 1.

In the figure of microscope 11 (Fig. 2A and Fig. 2B), an illumination optical system 51 that emits illumination light for sample illumination is provided on the upper side of the microscope 11. The illumination light emitted by the illumination optical system 51 is condensed by a lens 52 that is provided immediately below the illumination optical system 51, and is irradiated onto a sample 53 that is disposed on the motorized stage 21. The illumination light that is irradiated onto the sample 53 passes through the sample 53 and becomes observation light. The observation light strikes an objective lens 54 that is disposed at a position opposite the sample 53, at the lower portion of the motorized stage 21 in the figure. The observation light that is incident onto the objective lens 54 strikes the camera 14 and an eyepiece lens 55 via an optical system not shown.

The camera 14 is connected to the microscope 11. The sample 53 is imaged through photoelectric conversion of the observation light that is incident via the objective lens 54. The image captured as a result is supplied to the personal computer 15. The observation light from the objective lens 54 that is incident onto the eyepiece lens 55 is condensed by this eyepiece lens 55, to form thereby an image of the sample 53. Thus, the user can observe the sample 53 not only on the observation monitor 16, but also through the eyepiece lens 55.

An objective lens operating section 56 for moving the objective lens 54 in the direction of the optical axis of the latter, i.e. in the up-and-down direction in the figure, is provided in the vicinity of the camera 14 of the microscope 11. When the objective lens operating section 56 is operated, the objective lens 54 moves vertically in response to that operation.

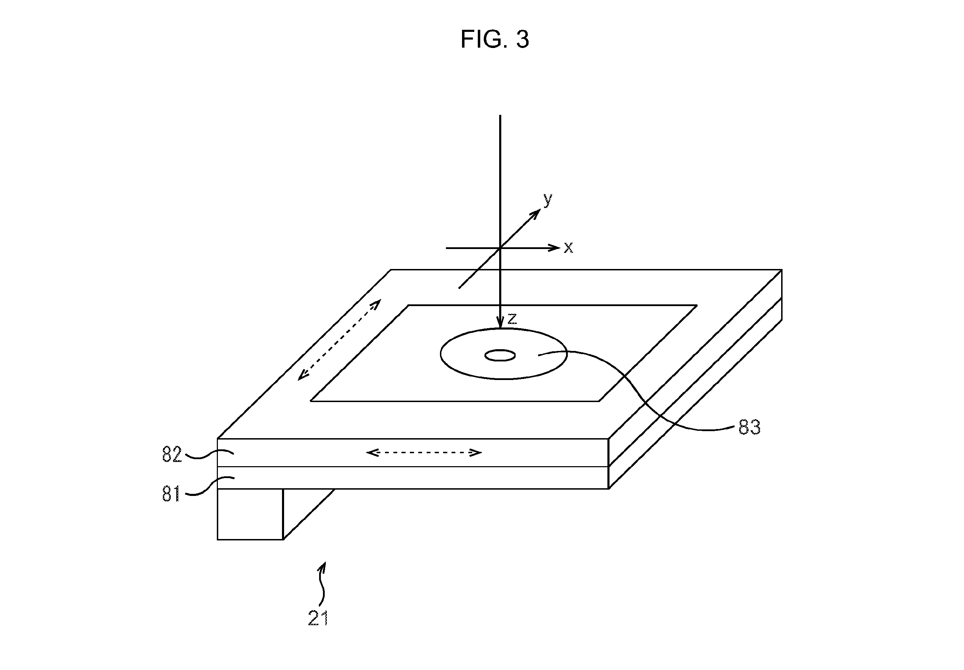

As illustrated in Fig. 3, the motorized stage 21 provided in the microscope 11 comprises for instance a fixed platform 81 fixed to the microscope 11, and a movable platform 82 that moves in a direction perpendicular to the optical axis of the objective lens 54, in response to an operation of the operating section 12 by the user.

In Fig. 3, the movable platform 82 is provided over the fixed platform 81, adjacent to the latter. A sample platform 83, on which there is disposed a container such as a glass-bottom dish or a well plate, is provided in the center of the movable platform 82. A circular hole is provided in the middle of the sample platform 83. In the figure, illumination light from the illumination optical system 51, and which is irradiated onto the sample platform 83 from above, passes through a hole provided in the sample platform 83, and strikes the objective lens 54 that is provided under the sample platform 83.

The direction parallel to the optical axis of the objective lens 54, i.e. the up-and-down direction in the figure, is the z direction. The direction perpendicular to the z direction and running from left to right in the figure is the x direction. The direction perpendicular to both the z direction and the x direction, and which extends from the foreground to the far side in the figure, is the y direction. Thus, the movable platform 82 moves in a direction parallel to the x direction and a direction parallel to the y direction, relative to the fixed platform 81. Through the above movement of the movable platform 82 relative to the fixed platform 81, the movable platform 82 moves in such a manner that samples can be observed over an area that is larger than the field of view of the microscope 11.

The motorized stage 21 may be provided beforehand in the microscope 11, or may be a device separate from the microscope 11, for instance a device provided on the controller 13 and that is mounted to the microscope 11.

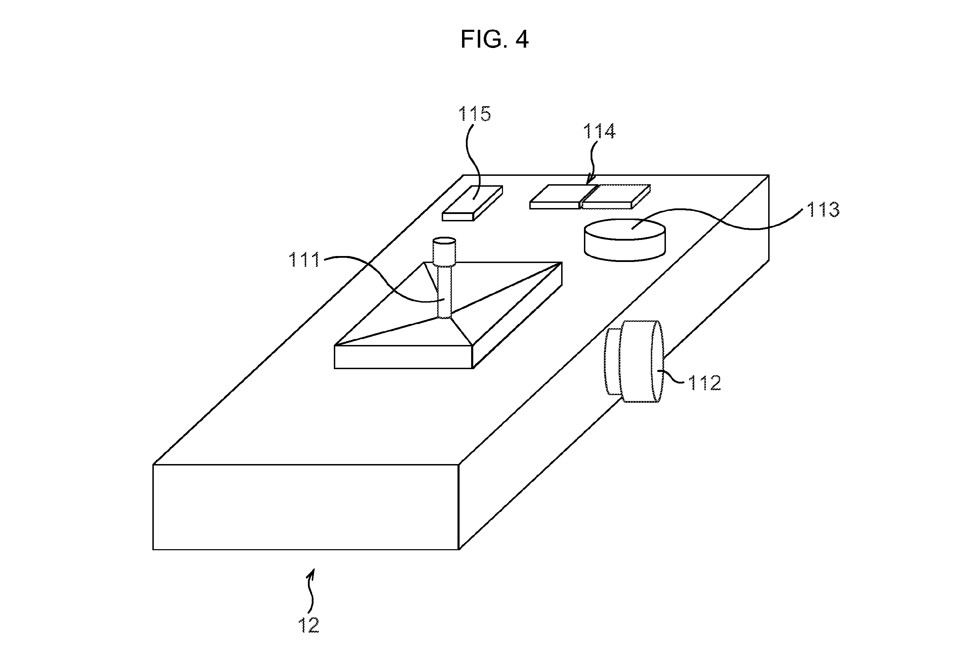

When moving the motorized stage 21, the user operates also a joystick that is provided in the operating section 12, for instance as illustrated in Fig. 4, to move the motorized stage 21.

Specifically, a joystick 111 is provided in the middle of the operating section 12, in such a manner that the joystick 111 can be tilted in any direction. When the user tilts the joystick 111, the operating section 12 supplies to the controller 13 a signal corresponding to that tilting operation. The motorized stage 21 is controlled thereupon by the controller 13 so as to move in the direction to which the joystick 111 is tilted.

A z-axis operating knob 112 is provided on the right side face of the operating section 12. When the user operates the z-axis operating knob 112, the operating section 12 supplies to the controller 13 a signal corresponding to the operation, whereupon the objective lens 54 provided in the microscope 11 moves in a direction parallel to the z direction. To move the objective lens 54, specifically, the controller 13 drives a motor, not shown, that is provided in the microscope 11, in accordance with the signal supplied as a result of the operation of the z-axis operating knob 112.

A reference time setting knob 113, a stage position reproduction button 114 and a confirm button 115 are provided on the upper side of the joystick 111 in the operating section 12. The reference time setting knob 113 is operated upon setting of a reference time that is a reference for registering observation positions. When the motorized stage 21 does not move in a direction parallel to the x direction or a direction parallel to the y direction as a result of the operation of the reference time setting knob 113, for a set reference time or longer, that position of the motorized stage 21 is registered as an observation position.

The stage position reproduction button 114 comprises two buttons, an advance button and a backtrack button, and is operated for moving the motorized stage 21 to observation positions that are registered and ordered. That is, when a plurality of observation positions are registered, and once registration is over, the controller 13 causes the motorized stage 21 to move sequentially to a previous or next observation position, in response to an operation of the stage position reproduction button 114 by the user. As a result, the user can check a sample at respective observation positions to determine a final observation position.

The confirm button 115 is operated to decide that a registered observation position is a final observation position. When the confirm button 115 is operated, the controller 13 supplies to the personal computer 15 observation position information on the final observation position, in response to a signal supplied by the operating section 12 as a result of the operation of the confirm button 115.

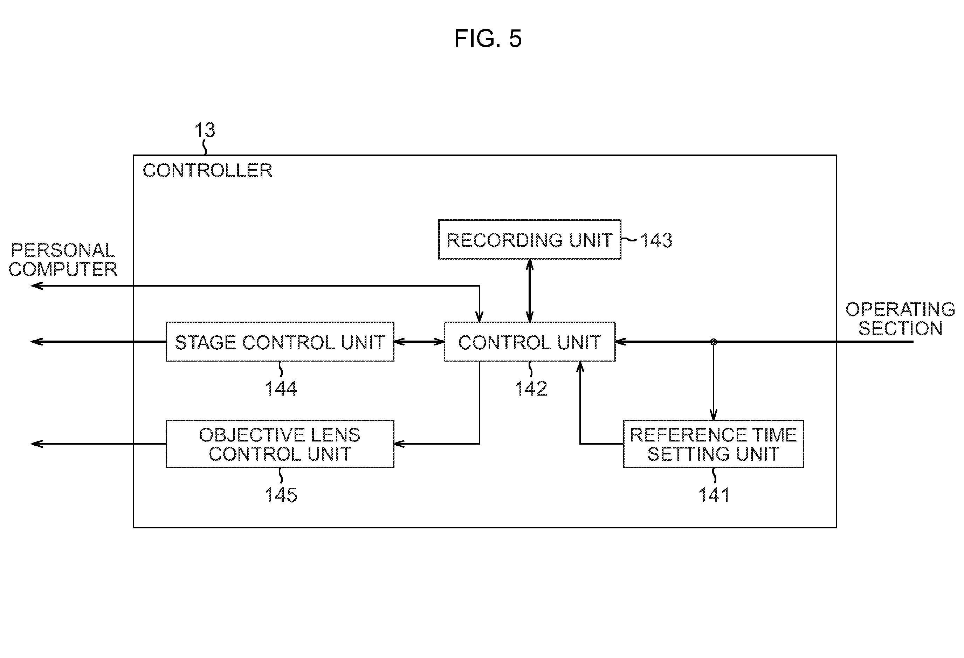

Fig. 5 is a block diagram illustrating a functional configuration example of the controller 13 of Fig. 1.

The controller 13 comprises a reference time setting unit 141, a control unit 142, a recording unit 143, a stage control unit 144 and an objective lens control unit 145.

The reference time setting unit 141 sets a reference time in accordance with a signal supplied by the operating section 12, and holds the set reference time. The control unit 142 controls the entire controller 13. For instance, the control unit 142 issues an instruction to the stage control unit 144 to the effect of moving the motorized stage 21, or issues an instruction to the objective lens control unit 145 to the effect of moving the objective lens 54, in response to a signal from the operating section 12.

When the motorized stage 21 stops for a reference time or longer that is held in the reference time setting unit 141, the control unit 142 acquires, from the stage control unit 144, information denoting the position of the motorized stage 21. The control unit 142 supplies the acquired information, as observation position information, to the recording unit 143, for the information to be recorded, and also supplies stop time information, indicating the time over which the motorized stage 21 is stopped at that time, to the recording unit 143, for the information to be recorded.

The recording unit 143 records the observation position information and stop time information, supplied by the control unit 142, ordered in the sequence in which the observation positions are registered. The stage control unit 144 causes the motorized stage 21 to move in response to the instruction from the control unit 142. The objective lens control unit 145 causes the objective lens 54 to move in response to the instruction from the control unit 142.

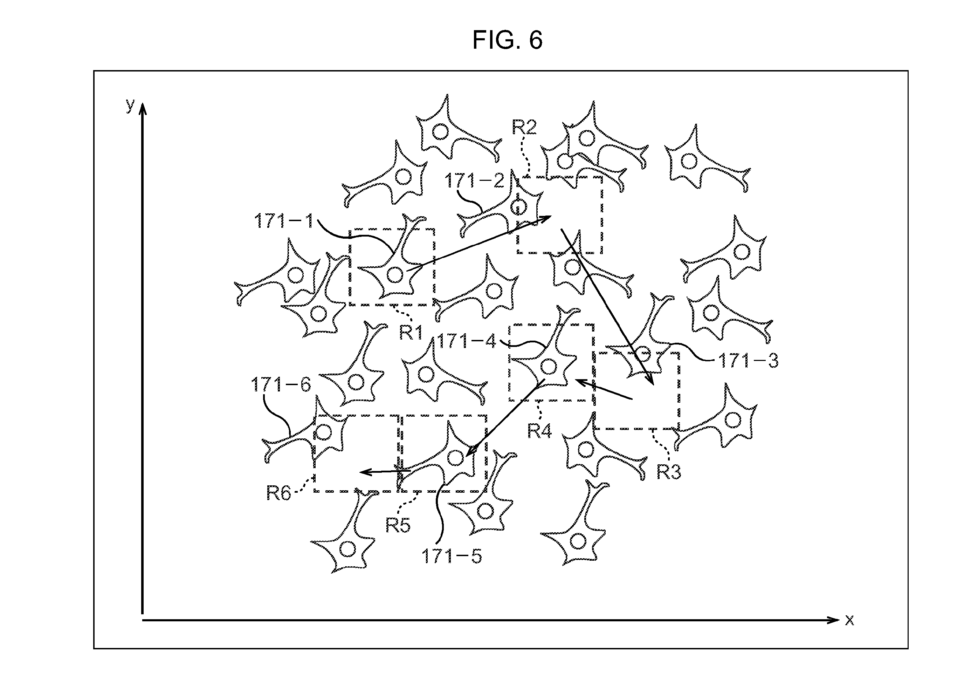

As a process of a preparatory stage of time-lapse observation, the user observes a sample while causing the motorized stage 21 to move, and selects a sample for time-lapse observation. For instance, when the user observes a sample by causing the motorized stage 21 to move, the position at which the motorized stage 21 stops for the reference time or longer is registered as an observation position, as illustrated in Fig. 6. In Fig. 6 the rightward direction is depicted as the x direction, and the upward direction is depicted as the y direction.

In the example of Fig. 6, region R1 to region R6, which are indicated by broken-line squares, denote zones of the field of view of the microscope 11 at a time when the motorized stage 21 is stopped, i.e. positions of the field of view for the entire sample, within the area of the entire sample to be observed.

When observation starts, the field of view of the microscope 11 is positioned at region R1. A cultured cell 171-1 can be observed, as a sample, substantially in the center of region R1 within the field of view. Once a predetermined time has elapsed, the motorized stage 21 moves, whereupon the field of view of the microscope 11 moves rightwards and upwards in the figure with respect to the entire sample 53, and stops thereafter at region R2. Region R2 contains part of a cultured cell 171-2, so that only the right portion of the cultured cell 171-2 can be observed, within the field of view, when the field of view of the microscope 11 is positioned at region R2.

After a predetermined time in which the field of view of the microscope 11 is stopped at region R2, the user causes the motorized stage 21 to move again, whereupon the field of view of the microscope 11 moves rightwards and downwards, and stops at region R3. Region R3 contains part of a cultured cell 171-3, so that only the lower portion of the cultured cell 171-3 can be observed within the field of view.

The motorized stage 21 moves after a predetermined time in which the field of view of the microscope 11 is stopped at region R3, whereupon the field of view of the microscope 11 moves leftwards and upwards, and stops at the position of region R4 for a predetermined time. The field of view of the microscope 11 moves leftwards and downwards from region R4, stops at the position of region R5, moves further leftwards, and stops at the position of region R6. This completes sample observation at the preparatory stage.

A cultured cell 171-4 can be observed in the middle of the field of view when the field of view of the microscope 11 is positioned at region R4. A cultured cell 171-5 can be observed in the middle of the field of view when the field of view of the microscope 11 is positioned at region R5. Part of a cultured cell 171-6 can be observed at the left edge of the field of view when the field of view of the microscope 11 is positioned at region R6. Hereafter, the samples in the form of cultured cell 171-1 to cultured cell 171-6 will be referred to merely as cultured cell 171 when no particular distinction is required among them.

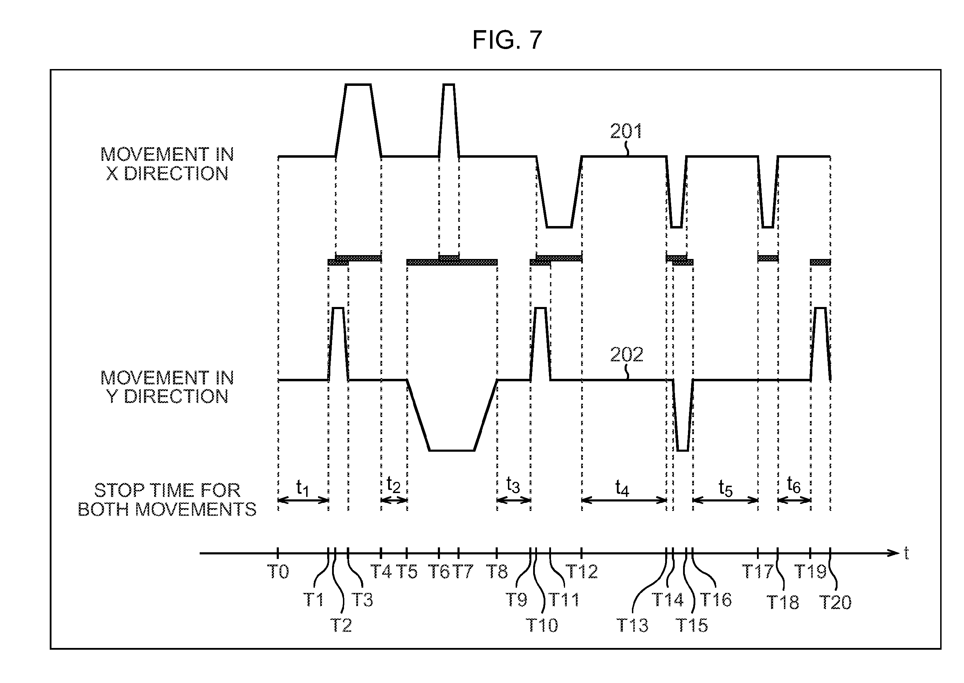

Thus, the field of view of the motorized stage 21 is caused to move as illustrated in Fig. 7 when the user observes the sample through sequential displacement of the field of view of the microscope 11 from region R1 to region R6. In the figure, curve 201 denotes the displacement speed of the field of view of the microscope 11 along the x direction, and curve 202 denotes the displacement speed of the field of view of the microscope 11 along the y direction. The horizontal direction in the drawing denotes time.

At time T0, the user starts observation of all samples, in order to select a sample for time-lapse observation. Thereupon, the motorized stage 21 is stopped at a position where the field of view is region R1, from time T0 to time T1.

The height of curve 201 and curve 202 at time T0 in the vertical direction in the figure (hereafter referred optionally to as reference position) denotes a speed 0, which indicates that the field of view of the microscope 11 (motorized stage 21) is stationary and moving in neither the x direction nor the y direction. When the height of curve 201 and curve 202 in the vertical direction at a predetermined time is higher than the reference position, it means that the field of view of the microscope 11 is moving in the x direction and the y direction. When the height of curve 201 and curve 202 in the vertical direction at a predetermined time is lower than the reference position, it means that the field of view of the microscope 11 is moving in a direction opposite to the x direction and a direction opposite to the y direction.

When the field of view of the microscope 11 moves in the x direction with respect to the entire sample, the motorized stage 21 itself moves in a direction opposite to the x direction, When the field of view of the microscope 11 moves in the y direction with respect to the entire sample, the motorized stage 21 itself moves in a direction opposite to the y direction.

The field of view of the microscope 11 is stopped up to time T1. Thereafter, the field of view moves in the y direction in the period from time T1 to time T3, moves in the x direction over a period from time T2 between time T1 and time T3, up to time T4 later than time T3. Specifically, the height of curve 202 is higher than the reference position from time T1 to time T3, and hence the field of view of the microscope 11 is moving in the y direction. The height of curve 201 is higher than the reference position from time T2 to time T4, and hence the field of view of the microscope 11 is moving in the x direction. In the period from time T1 to time T4, therefore, the motorized stage 21 moves in such a manner that the field of view of the microscope 11 moves rightwards and upwards in Fig. 6, i.e. from region R1 to region R2.

The field of view of the microscope 11 is stopped in the period from time T4 to time T5. Thereafter, the field of view moves in a direction opposite to the y direction, in the period from time T5 to time T8,and moves in the x direction in a period from time T6, lying between time T5 and time T8, up to time T7. In the period from time T5 to time T8, thus, the height of curve 202 is lower than the reference position, and hence the field of view of the microscope 11 is moving a direction opposite to the y direction. In the period from time T6 to time T7, the height of curve 201 is higher than the reference position, and hence the field of view of the microscope 11 is moving in the x direction. In the period from time T5 to time T8, therefore, the motorized stage 21 moves in such a manner that the field of view of the microscope 11 moves rightwards and downwards in Fig. 6, i.e. from region R2 to region R3.

The field of view of the microscope 11 is stopped in the period from time T8 to time T9. Thereafter, the field of view moves in the y direction, in the period from time T9 to time T11, and moves in a direction opposite to the x direction in the period from time T10, lying between time T9 and time T11, up to time T12 later than time T11. In the period from time T9 to time T12, therefore, the motorized stage 21 moves in such a manner that the field of view of the microscope 11 moves leftwards and upwards in Fig. 6, i.e. from region R3 to region R4.

The field of view of the microscope 11 is stopped from time T12 to time T13. Thereafter, the field of view moves in a direction opposite to the x direction, in the period from time T13 to time T15, and moves in a direction opposite to the y direction in the period from time T14, lying between time T13 and time T15, up to time T16 later than time T15. In the period from time T13 to time T16, therefore, the motorized stage 21 moves in such a manner that the field of view of the microscope 11 moves leftwards and downwards in Fig. 6, i.e. from region R4 to region R5.

Thereafter, the field of view of the microscope 11 stops during the period from time T16 to time T17, and moves then in a direction opposite to the x direction in the period from time T17 to time T18. In the period from time T17 to time T18, therefore, the motorized stage 21 moves in such a manner that the field of view of the microscope 11 moves leftwards in Fig. 6, i.e. from region R5 to region R6. The field of view of the microscope 11 is stopped in the period from time T18 to time T19. Thereafter, the field of view moves in the y direction during the period from time T19 to time T20. This completes observation of the entire sample by the user.

The period from time T0 to time T1, the period from time T4 to time T5, the period from time T8 to time T9, the period from time T12 to time T13, the period from time T16 to time T17, and the period from time T18 to time T19 are period t1 to period t6, respectively. The motorized stage 21, thus, is stopped and stationary over the respective period t1 to period t6, from the beginning until completion of observation of the entire sample by the user. Hereafter, a stop time t1 to stop time t6 denote the length, i.e. the duration, of a respective period t1 to period t6.

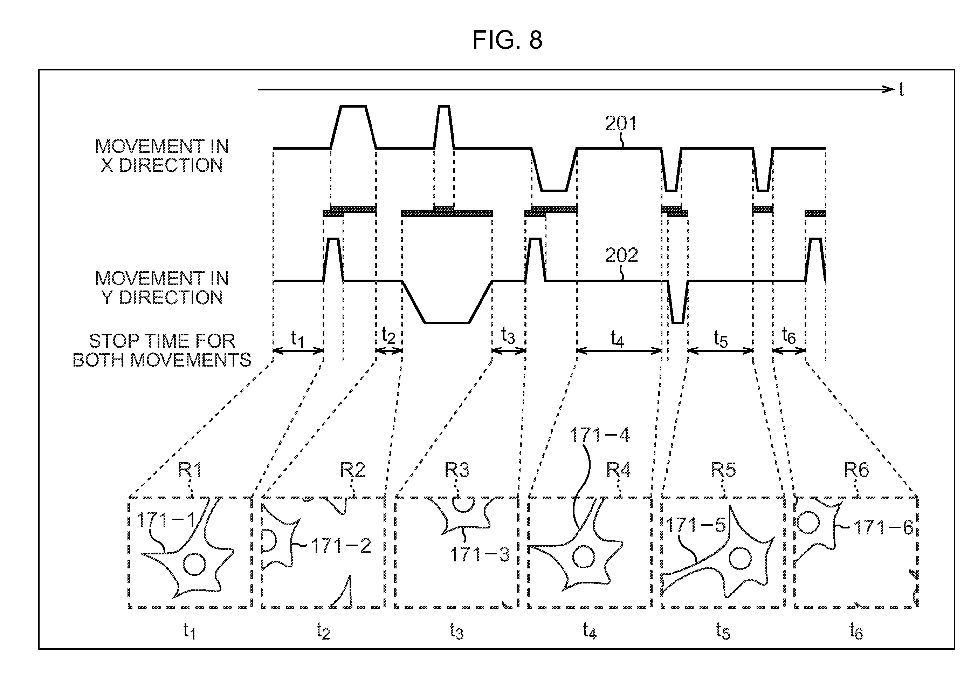

In period t1 to period t6, thus, the motorized stage 21 is stopped at respective positions where the field of view of the microscope 11 is region R1 to region R6 of Fig. 6, respectively. Thus, the portions of region R1 to region R6, from among the entire sample, are observed at each respective period from period t1 to period t6, as illustrated in Fig. 8. within the field of view of the microscope 11. In Fig. 8, the portions corresponding to those of Fig. 6 and Fig. 7 are denoted with the same reference numerals, and a recurrent explanation thereof is omitted.

In Fig. 8, a cultured cell 171 is observed substantially at the center of the field of view of the microscope 11 in period t1, period t4 and period t5, over which the motorized stage 21 is stopped for a longer time than in period t2, period t3 and period t6, respectively. Therefore, the motorized stage 21 may conceivably stop for a comparatively long time over period t1, period t4 and period t5 because the user has discovered a cultured cell 171, as a sample that matches the observation purpose, and has readjusted the focus of the objective lens 54 in the z direction, to observe the cultured cell 171 in more detail within the field of view.

The cultured cell 171 is observed not at the center but at an edge of the field of view of the microscope 11 in period t2, period t3 and period t6, over which the motorized stage 21 is stopped for a shorter time than in period t1, period t4 and period t5, respectively. Therefore, the motorized stage 21 may conceivably stop for a comparatively short time over period t2, period t3 and period t6 because the user considers that the cultured cell 171 within the field of view is not a sample that matches the observation purpose, and moves the motorized stage 21 straightway, or when the user, for some reason, withdraws temporarily the hand with which he/she is operating the microscope 11.

Therefore, the length of the period in which the user observes in detail a sample that he/she deems to be a target for observation, i.e. the period in which a sample that the user actually wants to observe stands within the field of view of the microscope 11, lasts for a given duration or longer from among the periods at which the motorized stage 21 is stopped. The length of other periods at which for some reason the motorized stage 21 is stopped can be inferred thus to be shorter than the length of the period in which a sample that the user actually wants to observe stands within the field of view of the microscope 11.

As described above, setting beforehand the reference time by way of the reference time setting knob 113 of Fig. 4 allows registering, as an observation position, the position of the motorized stage 21 at a period in which a sample that the user actually wants to observe stands within the field of view of the microscope 11. When the motorized stage 21 is stopped in period t1 to period t6 as illustrated in Fig. 8, therefore, the positions of the motorized stage 21 at periods whose length is equal to or longer than the reference time, from among period t1 to period t6, are registered as an observation position.

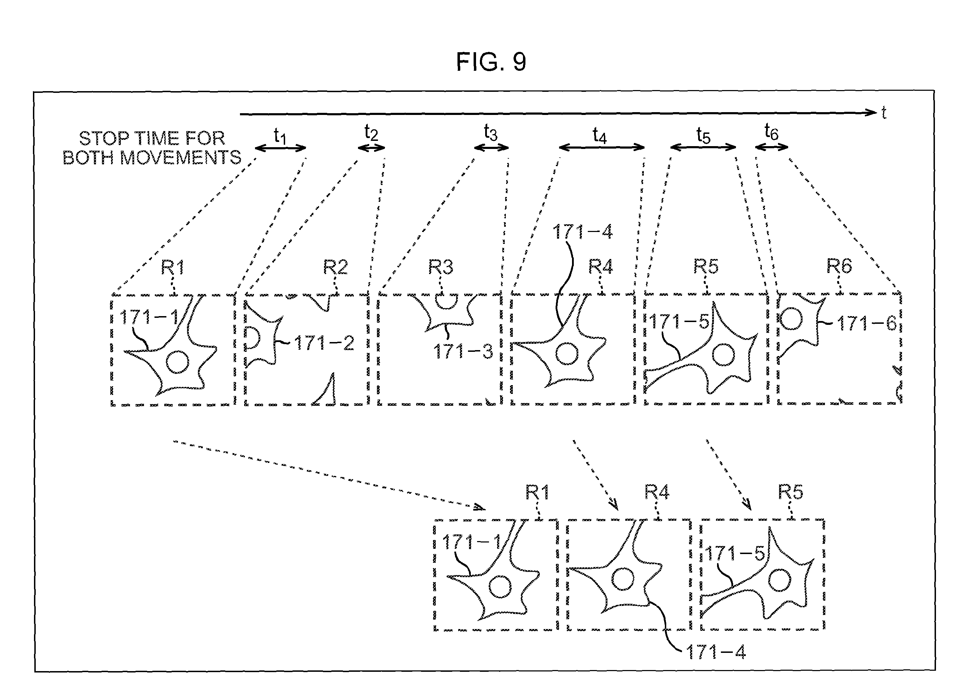

When, for instance, the set reference time is shorter than stop time t1, stop time t4, and stop time t5, and longer than stop time t2, stop time t3, and stop time t6, only the positions of the motorized stage 21 in period t1, period t4 and period t5 are registered as an observation position, as illustrated in Fig. 9. In Fig. 9, the portions corresponding to those of Fig. 8 are denoted with the same reference numerals.

In the example of Fig. 9, the positions of the motorized stage 21 in period t1, period t4 and period t5, in which the stop time is equal to or longer than the set reference time, from among period t1 to period t6, are registered as an observation position. The position of the motorized stage 21 at the remaining period t2, period t3 and period t6 is not registered as an observation position. During time-lapse observation, the motorized stage 21 is sequentially moved to the observation positions of the registered period t1, period t4 and period t5, within a definite interval of time, so that the user can observe region R1, region R4 and region R5.

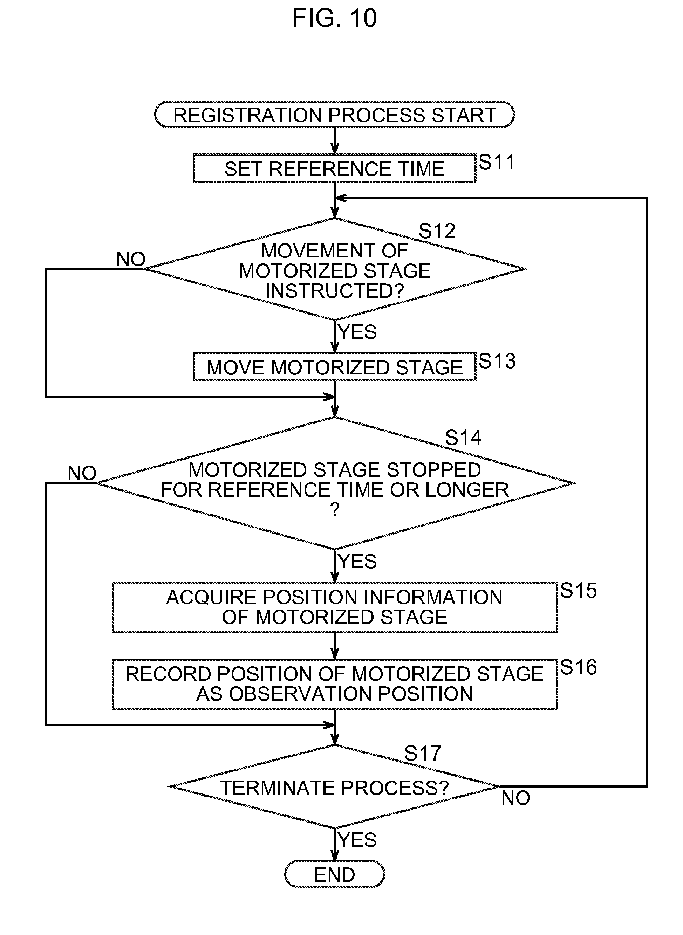

A registration process in which the controller 13 registers observation positions is explained next with reference to the flowchart of Fig. 10. The registration process is carried out at a period in which the user observes the entire sample, at a preparatory stage of time-lapse observation. For instance, the registration process starts when the user operates the reference time setting knob 113 of the operating section 12, to begin observing samples.

In step S11, the reference time setting unit 141 sets a reference time. Specifically, the user designates a reference time by operating the reference time setting knob 113 of the operating section 12, whereupon the operating section 12 supplies a signal denoting the designated reference time to the reference time setting unit 141 of the controller 13. On the basis of a signal supplied by the operating section 12, the reference time setting unit 141 sets the time indicated by the signal as the reference time, and holds information denoting the set reference time.

Upon setting of the reference time as described above, the user observes the entire sample that is disposed on the motorized stage 21 while operating the joystick 111 to instruct movement of the motorized stage 21, and while operating the z-axis operating knob 112 to instruct movement of the objective lens 54.

In step S12 the control unit 142 determines whether movement of the motorized stage 21 has been instructed on the basis of a signal supplied by the operating section 12. For instance, movement is deemed to have been instructed when the user operates the joystick 111 and the operating section 12 supplies a signal instructing movement of the motorized stage 21 to the control unit 142 of the controller 13.

When in step S12 it is determined that movement of the motorized stage 21 has been instructed, the control unit 142 issues an instruction to the stage control unit 144 to the effect of moving the motorized stage 21, on the basis of a signal supplied by the operating section 12, and the process proceeds to step S13.

In step S13, the stage control unit 144 controls the motorized stage 21 and causes the motorized stage 21 to move, in accordance with the instruction from the control unit 142. A stepping motor (not shown) provided in the motorized stage 21 is driven as a result, and the movable platform 82 of the motorized stage 21 moves in the direction instructed by the user.

On the other hand, when in step S12 it is determined that movement of the motorized stage 21 has not been instructed, the processing of step S13 is skipped, and process proceeds to step S14. More specifically, the controller 13 causes the objective lens 54 to move, on the basis of a signal supplied by the operating section 12, when the user operates the z-axis operating knob 112 to instruct movement of the objective lens 54, regardless of whether the operating section 12 supplies or not, to the controller 13, a signal instructing movement of the motorized stage 21. That is, the control unit 142 instructs movement of the objective lens 54 to the objective lens control unit 145 on the basis of a signal supplied by the operating section 12. In response to the instruction from the control unit 142, the objective lens control unit 145 controls the microscope 11 so that the objective lens 54 moves in a direction parallel to the z direction.

When the motorized stage 21 is caused to move in step S13, or when in step S12 it is determined movement has not been instructed, the control unit 142 determines in step S14 whether the motorized stage 21 has stopped for the reference time or longer.

When the user operates the joystick 111, the operating section 12 supplies to the control unit 142 a signal corresponding to the operation by the user. The control unit 142 can therefore grasp whether the motorized stage 21 is moving or is stopped. The control unit 142 determines whether the motorized stage 21 has stopped for the reference time or longer on the basis of the reference time denoted by the information held by the reference time setting unit 141.

When in step S14 it is determined that the motorized stage 21 has stopped for the reference time or longer, the control unit 142 acquires in step S15 information denoting the position at which the motorized stage 21 has stopped, from the stage control unit 144.

The information denoting the acquired position may be, for instance, information on coordinates that indicate the position of the motorized stage 21. The coordinate system of such coordinates may take, for instance, the intersection between the surface of the sample platform 83 and the optical axis of the objective lens 54 as a reference point (origin), such that straight lines that are parallel to the x direction, the y direction and the z direction, and that run through the reference point, constitute the x-axis, the y-axis and the z-axis, respectively.

The information denoting the position of the motorized stage 21 is information that indicates the x coordinate and the y coordinate, within the above coordinate system, of the position of the center of the surface of the sample platform 83 of the stopped motorized stage 21. In response to a request from the control unit 142, the stage control unit 144 supplies the information denoting the position to the control unit 142.

The information denoting the position of the motorized stage 21, as observation position information, may include not only information indicating an x coordinate and a y coordinate, but also information denoting the position of the objective lens 54 in the z direction, for instance information indicating the z coordinate of the position of the objective lens 54. When the observation position information includes only information indicating the x coordinate and the y coordinate, it is necessary to adjust the position of the objective lens 54 before time-lapse observation. The position of the sample in the z direction, however, is substantially identical for any sample in the container. Therefore, adjusting the position of the objective lens 54 in the z direction before start of time-lapse observation allows preventing the sample from being viewed off-focus within the field of view of the microscope 11 when the motorized stage 21 moves to an observation position later on.

Upon acquisition of information indicating the position of the motorized stage 21, the control unit 142 registers, in step S16, the position at which the motorized stage 21 is stopped as an observation position, and the process proceeds to step S17. Specifically, the control unit 142 supplies the position-indicating information, acquired from the stage control unit 144, to the recording unit 143, as observation position information of the motorized stage 21, for the information to be recorded, and also supplies stop time information, indicating the time over which the motorized stage 21 is stopped, to the recording unit 143, for the information to be recorded. The recording unit 143 records the observation position information and stop time information supplied by the control unit 142, ordered in the sequence in which the observation positions are registered.

Therefore, when it is determined that the motorized stage 21 is stopped for the reference time or longer, for instance in a state where the region R1 of Fig. 6 is observed within the field of view of the microscope 11, the control unit 142 sets, as the observation position information, information indicating the position of the motorized stage 21 in the state where the region R1 is observed within the field of view of the microscope 11. The control unit 142 supplies the above observation position information, as well as stop time information indicating a stop time t1 over which the motorized stage 21 is stopped in the above state, to the recording unit 143, for the information's to be recorded.

By contrast, when is step S14 it is determined that the motorized stage 21 is not stopped for the reference time or longer, the processing of step S15 and the processing of step S16 are skipped, and the process proceeds to step S17.

When in step S16 it is determined that an observation position is registered, or when in step S14 it is determined that the motorized stage 21 is not stopped for the reference time or longer, the control unit 142 determines, in step S17, whether the process of observation position registration is to be terminated or not, on the basis of a signal from the operating section 12. For instance, when the user has finished viewing the entire sample and operates the operating section 12 to instruct termination of observation position registration, the operating section 12 supplies to the control unit 142 a signal corresponding to the operation by the user, whereupon the control unit 142 determines that the process is to be terminated.

When in step S17 it is determined that the process is not to be terminated, the process returns to step S12, and the above process is repeated. Specifically, there is repeated the process in which there is registered, as an observation position, a position at which the motorized stage 21 is stopped for the reference time or longer.

As a result there are registered, as observation positions, for instance the positions of the motorized stage 21 in period t1, period t4 and period t5 of Fig. 9, i.e. the positions of the motorized stage 21 for observing region R1, region R4 and region R5 within the field of view of the microscope 11.

By contrast, when in step S17 it is determined that the process is to be terminated, the registration process being executed by the various units of the controller 13 is discontinued.

Thus, when the motorized stage 21 is stopped for the reference time or longer instructed by the user, the controller 13 registers the position of the motorized stage 21 as an observation position, and records observation position information and stop time information.

Thus, the position of the motorized stage 21 that is estimated to allow observing, within the field of view of the microscope 11, the sample that the user intends as a target for time-lapse observation, can be recorded, as observation position information, through recording of observation position information and stop time information on the position at which the motorized stage 21 is stopped for the reference time or longer. Stage positions desired by the user can thus be registered quickly and in a simple manner.

The user operates the joystick 111 and the z-axis operating knob 112 to move the objective lens 54 and/or the motorized stage 21 while observing the entire sample. The user simply confirms then a sample that matches the observation purpose, whereupon the position of the motorized stage 21 at which the desired sample is observed within the field of view of the microscope 11 is registered as an observation position. Therefore, the user does not have to perform the bothersome operation of registering one by one the observation positions while in the middle of sample observation, and thus no time is lost on account of the registration operation.

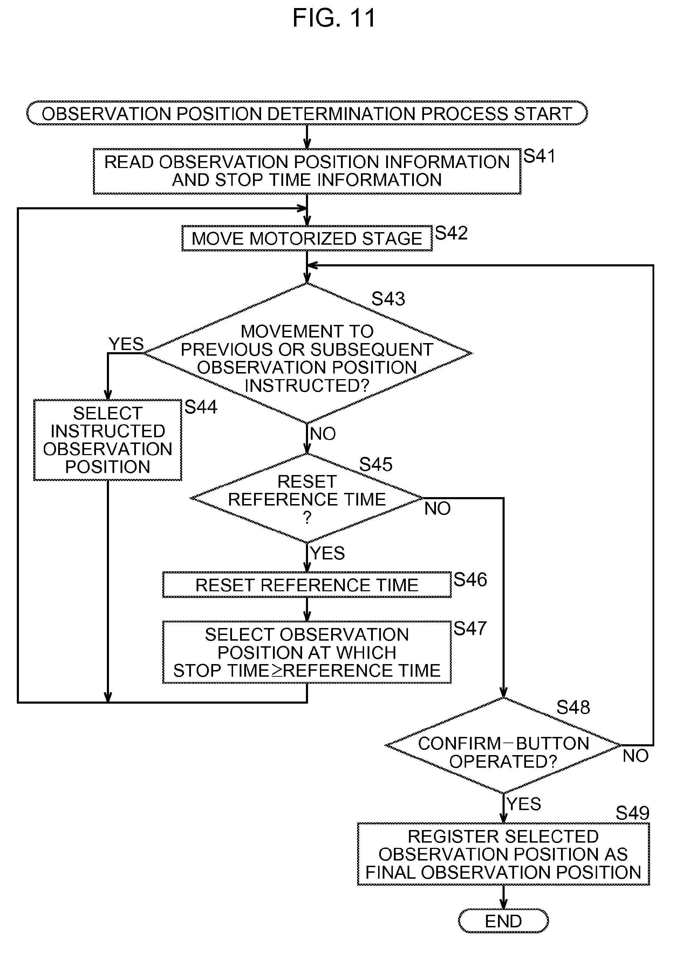

Once the registration process of observation positions is over, the controller 13 causes then the motorized stage 21 to move to the registered observation positions, and launches an observation position determination process that is a process in which the user determines a final observation position. The observation position determination process by the controller 13 is explained next with reference to the flowchart of Fig. 11.

In step S41, the control unit 142 reads observation position information and stop time information that are ordered and recorded in the recording unit 143. The control unit 142 enables an observation position indicated by a read observation position information as a candidate for final observation position, and selects an initially registered observation position, from among the candidate observation positions, i.e. selects the observation position information of that observation position.

In step S42, the stage control unit 144 causes the motorized stage 21 to move to the observation position selected by the control unit 142. Specifically, the control unit 142 issues an instruction to the effect that the motorized stage 21 is to move to one selected observation position. In accordance with the instruction from the control unit 142, the stage control unit 144 controls the motorized stage 21 so that the movable platform 82 of the motorized stage 21 moves to the observation position, namely the observation position indicated by the observation position information.

The user can observe as a result a desired sample within the field of view of the microscope 11. The user confirms the sample by observing the latter through the eyepiece lens 55, and/or through the observation monitor 16. To confirm the sample, the user operates the stage position reproduction button 114 provided in the operating section 12, whereupon the motorized stage 21 moves accordingly. The samples are confirmed in succession through confirmation of a subsequent sample or a previous sample.

In step S43, the control unit 142 determines whether movement of the motorized stage 21 to a previous or a next observation position has been instructed on the basis of a signal supplied by the operating section 12. This unit determines that movement has been instructed when, for instance, the user operates the stage position reproduction button 114 and, as a result, the operating section 12 supplies a signal instructing the control unit 142 of the controller 13 to move sequentially the motorized stage 21 to a previous or next observation position.

When in step S43 it is determined that movement to a previous or next observation position has between instructed, the control unit 142 selects, in step S44, observation position information of the observation position to which movement has been instructed by the user, from among candidate observation positions. For instance, the observation positions of period t1, period t4 and period t5 of Fig. 9 are candidates for final observation position, and the selected observation position, namely the observation position that is the same as the position at which the motorized stage 21 currently stands, is the observation position of period t4. In this case, the control unit 142 selects, as a destination observation position, the observation position of one previous period t1, when the user instructs sequential movement to one previous observation position, and selects, as a destination observation position, the observation position of one subsequent period t5, when the user instructs sequential movement to one subsequent observation position.

After selection of a destination observation position, the process returns to step S42 and the above process is repeated. Specifically, the motorized stage 21 moves to a newly selected observation position. The motorized stage 21 moves to the selected observation position even if the user does not operate the stage position reproduction button 114. Thereafter, once a predetermined time has elapsed, the control unit 142 may select a next observation position, and may instruct the stage control unit 144 to cause the motorized stage 21 to move to that observation position.

When in step S43 it is determined that movement has not been instructed, the reference time setting unit 141 determines, in step S45, whether or not the reference time is to be reset. Upon confirmation of samples at the observation positions sequentially registered, through operation of the stage position reproduction button 114 by the user, the candidate observation positions may include in some cases positions of samples that the user does not wish to observe, on account of inadequate setting of the reference time. Therefore, the user can exclude observation positions that are not desired, from the final observation position candidates, by resetting of the reference time through operation of the reference time setting knob 113.

When the user operates the reference time setting knob 113, the operating section 12 supplies a signal denoting the designated reference time to reference time setting unit 141 of the controller 13, so that in step S45 it is determined that the reference time is to be reset.

When in step S45 it is determined that the reference time is to be reset, the reference time setting unit 141 resets, in step S46, the reference time on the basis of a signal supplied by the operating section 12. The reference time setting unit 141 holds information indicating the newly set reference time, according to which the reference time is updated.

In step S47, the control unit 142 selects, as new candidates, observation positions at which the stop time is equal to or longer than the reset reference time, from among observation positions that have been enabled as candidates for final observation position thus far.

For instance, the observation positions in period t1, period t3, period t4 and period t5 in Fig. 9 have been selected thus far as candidates for final observation position. The reference time is then reset to a time longer than stop time t3 but shorter than stop time t1, stop time t4 and stop time t5. In this case, the control unit 142 selects the observation positions of period t1, period t4 and period t5, at which the motorized stage 21 stops for a time equal to or longer than the new reference time, from among the observation positions of period t1, period t3, period t4 and period t5 that have been taken as candidates thus far, and enables these observation positions as new final observation position candidates.

Upon re-selection of final observation position candidates, the control unit 142 selects the initially registered observation positions from among the selected new candidates, i.e. selects observation position information of the observation positions, as a destination of the motorized stage 21. Thereafter, the process returns to step S42, and the motorized stage 21 moves to the observation position selected as a destination.

Upon re-selection of observation position candidates, there may also be selected as a destination, from among the observation positions, the immediately previous position of the motorized stage 21, i.e. an observation position that is close to the registration sequence number of the observation position that is selected immediately previously.

When in step S45 it is determined that the reference time is not to be reset, the control unit 142 determines in step S48 whether the confirm button 115 has been operated or not.

For instance, the user operates the stage position reproduction button 114 while viewing the sample displayed on the observation monitor 16, to cause the motorized stage 21 to move sequentially to a next or previous observation position that is a final observation position candidate. When after checking the samples at each observation position the user determines that a position selected as a candidate, and at which the stop time is equal to or longer than the reference time, may be registered as a final observation position, the user operates the confirm button 115, to instruct registration of this candidate observation position as a final observation position. Thereupon, the operating section 12 supplies, to the control unit 142 of the controller 13, a signal instructing registration in accordance with the operation by the user. The control unit 142 determines therefore in step S48 that the confirm button 115 has been operated.

When in step S48 it is determined that the confirm button 115 has not been operated, the process returns to step S43, and the above process is repeated.

By contrast, when in step S48 it is determined that the confirm button 115 has been operated, the control unit 142 registers in step S49, as final observation positions, the observation positions selected as candidates. Specifically, the control unit 142 enables the observation positions selected as candidates as observation positions for time-lapse observation, and supplies observation position information and stop time information of these observation positions to the recording unit 143, for the information's to be recorded, and supplies the observation position information also to the personal computer 15. The observation position determination process ends once the observation position information is sent to the personal computer 15.

Thus, the controller 13 moves the motorized stage 21 sequentially to the observation positions that are candidates to final observation position, and when reference time setting is instructed, resets the reference time, and re-selects new observation position candidates. When the confirm button 115 is operated, the controller 13 registers, as final observation positions, observation positions selected as candidates.

Thus, the motorized stage 21 sequentially moves to the observation positions that are candidates to final observation position, and when reference time setting is instructed, the reference time is reset, and observation position candidates are re-selected anew. As a result, those observation positions at which the user does not want to observe the sample, can be discarded, in a simple manner, from the final observation positions.

After having observed the entire sample, the user operates the stage position reproduction button 114 to check the samples at the respective observation positions, and operates the confirm button 115. The final observation positions can be confirmed by way of this simple procedure. When the observation position candidates include observation positions at which the user does not want to observe the sample, the user can update the reference time simply by instructing a new reference time through operation of the reference time setting knob 113. This allows excluding unnecessary observation positions, while including as candidates those observation positions that are required, from among non-candidate observation positions.

For instance, after the user has observed the entire sample by fluorescence observation, and has instructed registration of the observation positions to the controller 13, the user may observe the sample at each registered observation position, by bright field observation, while operating the stage position reproduction button 114, and may select final observation positions. That way, the user can observe each cultured cell 171, as a sample, by fluorescence observation and bright field observation, and can proceed then to confirm the final observation positions. This does away with the need for carrying out the bothersome conventional operation of registering observation positions after observation of the samples by both bright field observation and fluorescence observation.

When registering observation positions by operating the operating section 12 while observing a sample by eyepiece observation, using a wide field of view, the user can register the observation positions in a simple manner, without taking the eyes away from the eyepiece lens 55.

The observation position information is recorded at the personal computer 15 when the latter receives the observation position information from the controller 13. The personal computer 15 performs control for time-lapse observation on the basis of the recorded observation position information. For instance, the controller 13 supplies observation position information of the observation positions in period t1, period t4 and period t5 of Fig. 9, to the personal computer 15, which records thereupon the observation position information. Herein, the personal computer 15 instructs the controller 13 to cause the motorized stage 21 to move to the observation positions of period t1, period t4 and period t5, over a predetermined interval of time, and records the images of region R1, region R4 and region R5 as acquired by the camera 14.

Specifically, the personal computer 15 instructs the controller 13 to move the motorized stage 21 to the observation position of period t1, whereupon the control unit 142 of the controller 13 instructs the stage control unit 144 to move the motorized stage 21 in accordance with the instruction from the personal computer 15. The stage control unit 144 causes the motorized stage 21 to move in response to the instruction from the control unit 142.

The personal computer 15 issues various instructions for control of the microscope 11, and control of the optical path of the microscope 11, as the case may require, and/or for irradiation of excitation light onto the sample, for fluorescence observation, and for instructing the camera 14 to capture images of the sample. The microscope 11 performs the process in accordance with the instructions by the personal computer 15, and the camera 14 captures an image of the sample within the field of view of the microscope 11, and supplies to the personal computer 15 a captured image of the region R1.

The personal computer 15 records the image from the camera 14, and instructs the controller 13 to cause the motorized stage 21 to move sequentially to the observation position of period t4 and the observation position of period t5, to record images of region R1, region R4 and region R5 over a given time interval.

During focusing of the objective lens 54 in the above explanation, the objective lens 54 moves itself in a direction parallel to the z direction. However, it may be the motorized stage 21, and not the objective lens 54, that moves in a direction parallel to the z direction. In such a case, the control unit 142 instructs the stage control unit 144 to move the motorized stage 21 on the basis of a signal from the operating section 12, upon operation of the z-axis operating knob 112. In accordance with the instruction from the control unit 142, the stage control unit 144 causes the motorized stage 21 to move in a direction parallel to the z direction.

In the above explanation, also, observation positions are registered on the basis of movement of the motorized stage 21 exclusively in a direction parallel to the x direction and a direction parallel to the y direction, but may also be registered on the basis of movement of the objective lens 54 as well.

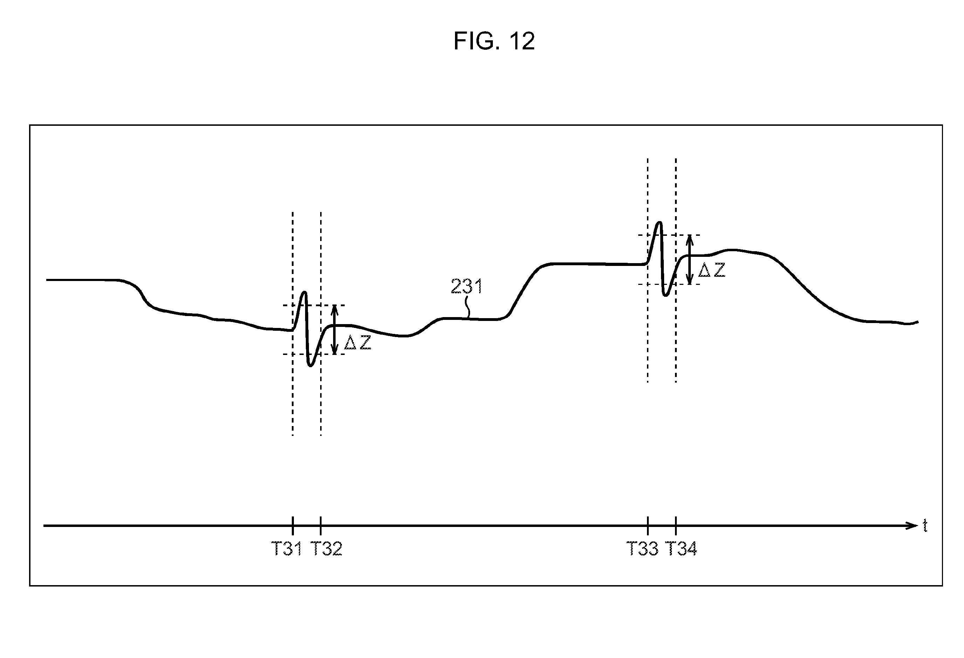

When the user finds a sample that matches the observation purpose, during observation of the entire sample, it is often the case that the user unconsciously re-focuses the objective lens 54 to better observe the discovered sample. Therefore, a period over which the position of the objective lens 54 in the z direction shifts abruptly over a short time, as illustrated in Fig. 12, is highly likely to be a period during which the user is observing better a sample that is found to match the purpose of the user. In Fig. 12, the vertical direction denotes the position of the objective lens 54 in the z direction, and the horizontal direction denotes time. Curve 231 denotes the change over time of the position of the objective lens 54 in the z direction.

In Fig. 12, curve 231 i.e. the position of the objective lens 54, changes substantially in a direction parallel to the z direction in the period from time T31 to time T32 and the period from time T33 to time T34. This position variation is at least Δz. Therefore, there is a high likelihood that the period from time T31 to time T32, and the period from time T33 to time T34, are periods in which the user finds a desired sample, and re-focuses the objective lens 54. The variation Δz depends to a certain extent on the specific character of the sample that is used.

If the period from time T31 to time T32, and the period from time T33 to time T34, are periods in which the user finds a desired sample, and re-focuses the objective lens 54, the motorized stage 21 is bound to stop for a predetermined period that includes the foregoing periods. Therefore, when in a period in which the motorized stage 21 is stopped the position of the objective lens 54 moves in a direction parallel to the z direction by a distance equal to or greater than Δz, within a comparatively short time (period) established beforehand, it may be assumed that the period over which the motorized stage 21 is stopped is a period during which a sample that matches the purpose of the user is being observed within the field of view of the microscope 11.

In such a case, when in step S14 of Fig. 10 the control unit 142 determines that the motorized stage 21 is stopped for the reference time or longer and the position of the objective lens 54 has moved in a period in which the motorized stage 21 is stopped in a direction parallel to the z direction by a distance equal to or greater than Δz, within a predetermined lapse of time, the position of the motorized stage 21 is registered as an observation position.

The displacement of the objective lens 54 in a direction parallel to the z direction may also be factored in. In such a case, the control unit 142 determines whether the position of the objective lens 54 has moved in a direction parallel to the z direction by a distance equal to or greater than Δz, within a predetermined lapse of time. If the displacement is determined to be equal to or greater than Δz, the control unit 142 registers the position of the motorized stage 21 at that time as an observation position.

In the explanation above, the displacement of the objective lens 54 in a direction parallel to the z direction may also be factored in. When the objective lens 54 remains fixed and it is the motorized stage 21 that moves in a direction parallel to the z direction, however, the observation positions are registered on the basis of the displacement of the motorized stage 21 in a direction parallel to the z direction. Therefore, when for instance the motorized stage 21 moves neither in a direction parallel to the x direction nor a direction parallel to the y direction, but moves in a direction parallel to the z direction by a distance equal to or greater than Δz, within a predetermined lapse of time, then the position of the motorized stage 21 is registered as an observation position.

Also, when for instance the motorized stage 21 moves in a direction parallel to the z direction by a distance equal to or greater than Δz, within a predetermined lapse of time, then the position of the motorized stage 21 may be registered as an observation position, regardless of whether the motorized stage 21 moves in a direction parallel to the x direction or a direction parallel to the y direction.

In the above explanation, the reference time is set in step S11 of Fig. 10. However, the reference time may also be set beforehand. In step S11, the position of the motorized stage 21 may be recorded as an observation position when the motorized stage 21 stops, even briefly, without setting any reference time. In such a case, the user can set a wider reference time range in step S46 of Fig. 11. Specifically, when a reference time is set in step S11 of the registration process of Fig. 10, only the positions at which the motorized stage 21 is stopped for the reference time or longer are recorded as observation positions. In step S46 of Fig. 11, therefore, it is essentially impossible to set a time shorter than an already-set reference time. Not setting the reference time in the registration process allows the reference time to be set more freely in the observation position determination process.

In the explanation above, observation positions selected as candidates are registered as final observation positions when the user operates the confirm button 115 after the registration process. However, it is also possible to individually select or not each observation position as a final observation position. In such a case, for instance, the stage position reproduction button 114 is operated, and when the motorized stage 21 has moved to a candidate observation position, the confirm button 115 is operated to register or not that observation position as a final observation position.

Also, the personal computer 15 may perform a process of acquiring information indicating the position of the motorized stage 21, from the controller 13, and registering an observation position when the motorized stage 21 is stopped for the reference time or longer; and/or a process in which candidate observation positions are re-selected in accordance with an update of reference time, and final observation positions are registered.

In the above explanation there is registered the position of the motorized stage 21, as a scanning member provided in a microscope, but there may also be registered, as an observation position, the position of a scanning mirror that scans a laser beam irradiated onto the sample, in a microscope equipped with a confocal head.

In a microscope equipped with a confocal head, a scanning mirror is caused to move (swing), to scan a laser beam that is irradiated onto a sample (to scan an observation region of the sample with a laser beam). When the scanning mirror does not move for a reference time or longer, the position of the scanning mirror is registered as an observation position, and observation position information thereof is recorded. In ordinary microscopes, the scanning member corresponds to the motorized stage on which a sample is disposed. In microscopes equipped with a confocal head, the scanning member corresponds to a scanning mirror that scans a laser beam irradiated towards a sample.

To select a final observation position from among a plurality of observation positions registered in the registration process, a plurality of imaging positions, specified by the registered observation positions, may be displayed on an image of the entire sample 53. Final observation positions may be registered through designation of some of these imaging positions.

Herein, an imaging position specified by an observation position refers to the position of the sample 53 within the field of view of the microscope 11 once the motorized stage 21 has moved to the observation position. That is, the motorized stage 21 moves to the observation position and a sample 22 is imaged to yield an image of the sample 53 at an imaging position.

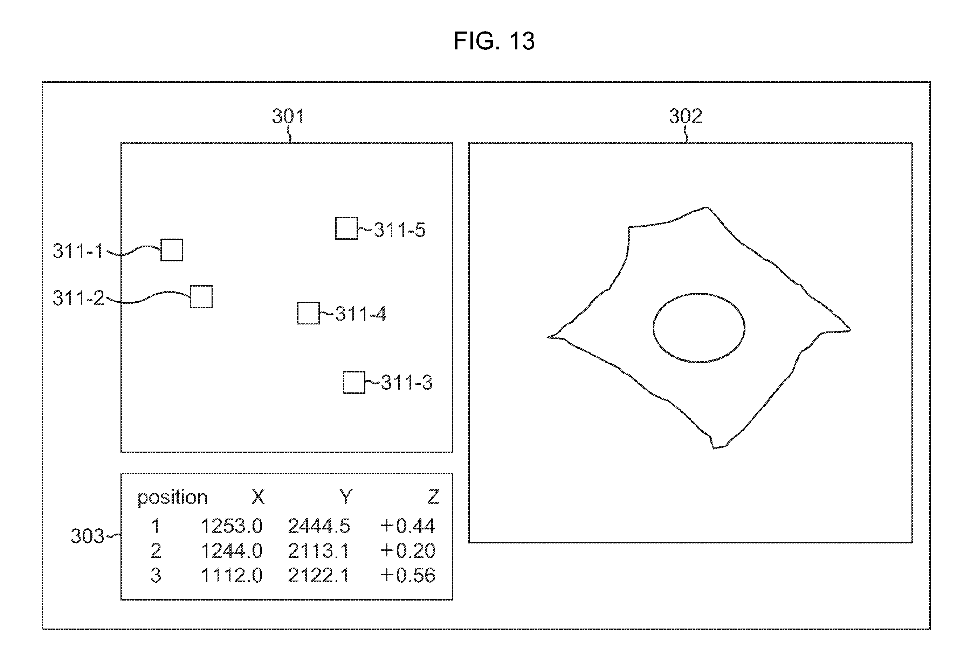

In this case, a designation screen, for instance as illustrated in Fig. 13, is displayed on the observation monitor 16.

The designation screen of Fig. 13 comprises four regions that include region 301 to region 303. In region 301 there is displayed a macro-image, which is an image of the entire sample 53, i.e. an image of the entire region within the container disposed on the motorized stage 21.

On the macro-image of region 301 there are overlappingly displayed frame 311-1 to frame 311-5 that depict the imaging positions specified by the registered observation positions. The regions surrounded by frame 311-1 to frame 311-5, for instance, are regions on the sample 53 that were observed in the microscope 11 during observation position registration. That is, frame 311-1 to frame 311-5 represent regions of the observation field of view of the microscope 11 during observation position registration. The frame 311-1 to frame 311-5 are collectively referred to hereafter as frame 311 unless a distinction between individual frames is required.

In region 302 there is displayed a micro-image, which is an image of the sample 53 captured during observation position registration, at the observation position specified by frame 311 on the macro-image designated by the user. In region 302 there is displayed, as a micro-image, the sample 53 in the form for instance of a cultured cell that is imaged at the observation position specified by the frame 311-3.

In region 303 there is displayed the x coordinate and y coordinate of the motorized stage 21, as well as the position of the objective lens 54 on the z direction, as information observation position specified by frame 311-1 to frame 311-5. Text including the strings "Position", "X", "Y" and "Z" indicates the observation position (frame 311), the x coordinate and y coordinate of the motorized stage 21, and the position of the objective lens 54 in the z direction.

Upon display of the designation screen on the observation monitor 16, the user operates the personal computer 15 to display micro-images of the respective observation positions, checks whether each observation position is suitable as a final observation position, and selects final observation positions. The user can select as a result observation positions for time-lapse observation in a simple manner.

On the designation screen, moreover, the macro-image is displayed with the frame 311 overlapped thereon. Accordingly, the user can grasp, in a simple manner, whether imaging positions corresponding to final observation positions are concentrated or not at one region on the macro-image, and can select observation positions yet more appropriate for time-lapse observation.

An explanation follows next on a registration process of registering observation positions, and an observation position determination process of determining a final observation position from observation positions that are registered in the registration process, that are carried out upon selection of a final observation position via the designation screen. In this case, the controller 13 is connected to the camera 14, directly or via the microscope 11.

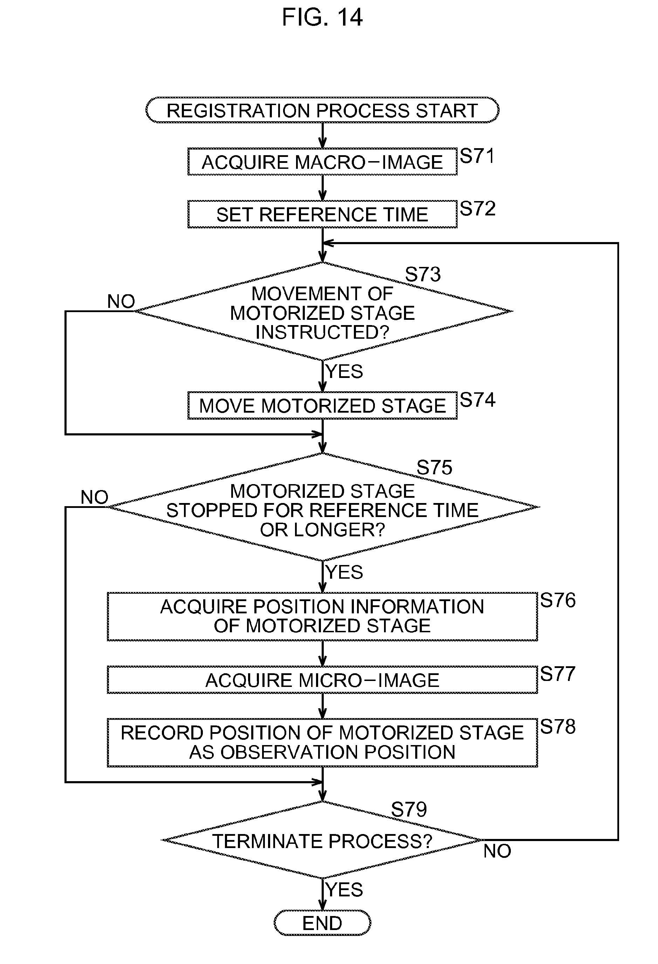

The registration process by the controller 13 will be explained first, with reference to the flowchart of Fig. 14.

In step S71, the control unit 142 acquires a macro-image from the camera 14. In accordance with an instruction from the control unit 142, the objective lens control unit 145 selects an appropriate objective lens 54 in such a manner that the entire sample 53 is contained in the region of the field of view of the microscope 11, and causes the selected objective lens 54 to be disposed on the optical path of the illumination light in the microscope 11.

In accordance with an instruction from the control unit 142, the camera 14 captures, as a macro-image, an image of the sample 53. The control unit 142 acquires the macro-image captured by the camera 14 and supplies it to the recording unit 143, where the macro-image is recorded optionally alongside information denoting the magnifications of the objective lens 54 during capture of the macro-image. Upon recording of the macro-image, the objective lens control unit 145 selects an appropriate objective lens 54 for observing the sample 53, and causes the selected objective lens 54 to be disposed on the optical path of the illumination light in the microscope 11.

Step S72 to step S75 are carried out thereafter. Processing in these steps is identical to that of step S11 to step S14 in Fig. 10, and hence a recurrent explanation thereof is omitted. Specifically, a reference time is set by the user through operation of the z-axis operating knob 112, and it is determined whether the motorized stage 21 is stopped for a reference time or longer.

When in step S75 it is determined the motorized stage 21 is stopped for the reference time or longer, the process proceeds to step S76. In step S76, the control unit 142 carries out the same processing as in step S15 of Fig. 10, and acquires position information that denotes the position at which the motorized stage 21 is stopped, from the stage control unit 144.

The control unit 142 acquires information denoting the position of the objective lens 54 in the z direction, from the objective lens control unit 145, and uses the acquired information denoting the position of the objective lens 54 in the z direction, as well as information indicating the position of the motorized stage 21, as observation position information. The observation position information, for instance, comprises an x coordinate and a y coordinate denoting the position of the motorized stage 21, and a z coordinate denoting the position of the objective lens 54.

In step S77, the control unit 142 acquires a micro-image from the camera 14. Specifically, the control unit 142 causes the camera 14 to capture an image of the sample 53, acquires the image obtained through capture by the camera 14, and uses that image as a micro-image. The micro-image is captured simultaneously with acquisition of observation position information, i.e. while the motorized stage 21 is stopped. Therefore, the micro-image is an image of the position (imaging position) of the sample 53 specified by the observation position information acquired in the processing of step S76.

In step S78, the control unit 142 registers the position at which the motorized stage 21 is stopped as an observation position. Specifically, the control unit 142 supplies the acquired observation position information, as well as the micro-image and observation position information mapped to the captured micro-image, to the recording unit 143, for the foregoing to be recorded.

The observation position information and micro-image are recorded mapped to a captured macro-image. In the case of a pieces of observation position information and micro-images, the pieces of observation position information and micro-images are recorded ordered in the sequence in which the observation positions are registered.

The control unit 142 may also acquire information denoting the magnifications of the objective lens 54, and cause that information denoting the magnifications to be recorded alongside the observation position information by the recording unit 143. As a result, it becomes possible to specify, on the basis of the information denoting magnifications, at what region of the macro-image the region of the field of view is located during observation, for each observation position.

When an observation position is registered in step S78, or in step S75 it is determined that the motorized stage 21 is stopped for the reference time or longer, the process proceeds to step S79. In step S79 the control unit 142 determines whether observation position registration is to be terminated or not, on the basis of a signal from the operating section 12. For instance, when the user has finished viewing the entire sample and operates the operating section 12 to instruct termination of observation position registration, the operating section 12 supplies to the control unit 142 a signal corresponding to the operation by the user, whereupon the control unit 142 determines that the process is to be terminated.

When in step S79 it is determined that the process is not to be terminated, the process returns to step S73, and the above process is repeated.

By contrast, when in step S79 it is determined that the process is to be terminated, the processing being executed by the various units of the controller 13 is discontinued, whereby the registration process is terminated.

Thus, when the motorized stage 21 is stopped for the reference time or longer, the controller 13 registers the position of the motorized stage 21 as an observation position, and records observation position information and micro-images mapped to a macro-image.

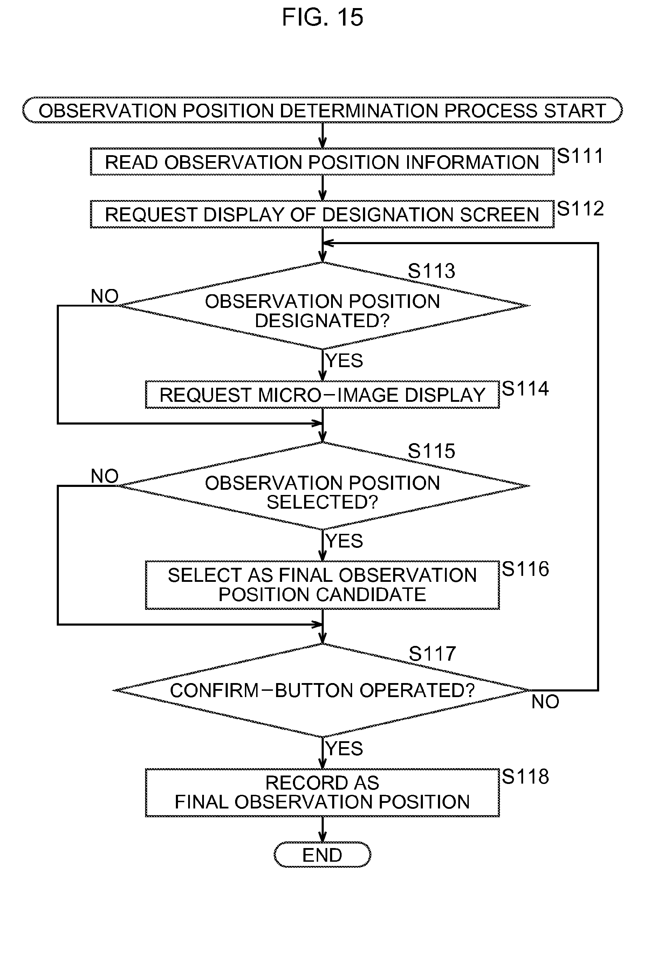

An explanation follows next on an observation position determination process by the controller 13, with reference to the flowchart of Fig. 15. The observation position determination process is carried out after the registration process of Fig. 14.

In step S111, the control unit 142 reads, from the recording unit 143, a macro-image, as well as observation position information and micro-images that are mapped to the macro-image and are recorded sequentially.

In step S112, the control unit 142 requests display of a designation screen to the personal computer 15.

Specifically, the control unit 142 generates image data for display of the designation screen of Fig. 13, using the read macro-image and observation position information. The control unit 142 supplies the generated image data to the personal computer 15, and requests display of the designation screen. The position of the frame 311 displayed in region 301 of the designation screen is specified on the basis of the information denoting the position of the motorized stage 21 (x coordinate and y coordinate) and which is included in the observation position information.

Upon receiving from the control unit 142 both the request for display of the designation screen and corresponding image data, the personal computer 15 displays the designation screen of Fig. 13 on the observation monitor 16, on the basis of the supplied image data.

Upon display of the designation screen, the user operates the personal computer 15 to cause a micro-image to be displayed, and designates the frame 311 of the imaging position that he/she wants to check. As a result, the personal computer 15 supplies, to the control unit 142, a signal indicating the designated frame 311.

In step S113, the control unit 142 determines whether or not there is designated an observation position corresponding to the imaging position on the macro-image of region 301. The control unit 142 determines that an observation position is designated when for instance the personal computer 15 supplies a signal indicating the frame 311 to the control unit 142.

When in step S113 it is determined that an observation position is designated, the control unit 142 requests display of a micro-image to the personal computer 15, in step S114. Specifically, the control unit 142 supplies to the personal computer 15 a micro-image mapped to the observation position information of the observation position specified by the supplied signal that indicates the frame 311, and requests display of that micro-image.

The personal computer 15 displays, in region 302 of the designation screen, the micro-image supplied by the control unit 142. As a result there is displayed the micro-image captured at the imaging position designated by the user. There may also be sequentially displayed micro-images of observation positions recorded in succession, through operation of the stage position reproduction button 114 of the operating section 12 by the user.

When in step S113 it is determined that no observation position is designated, the process in step S114 is skipped, and the process proceeds to step S115.

When in step S113 it is determined that no designation has taken place, or a micro-image is displayed in step S114, the control unit 142 determines in step S115 whether an observation position has been selected.

For instance, the user operates the personal computer 15, and selects any imaging position (frame 311) displayed on the designation screen, as a final imaging position (observation position) at which time-lapse observation is to be carried out. Thereupon, the personal computer 15 supplies to the control unit 142 a signal denoting the imaging position selected by the user. Upon reception of this signal, the control unit 142 determines that an observation position has been selected.

When in step S115 it is determined that an observation position has been selected, the control unit 142 selects in step S116 an observation position specified by the signal from the personal computer 15, as a final observation position candidate.

The user may also select an imaging position (observation position), at which time-lapse observation is to be carried out, by operating the operating section 12. Also, the user may operate the personal computer 15 and/or the operating section 12 to allow instructing cancellation of a choice of observation position, i.e. position of the motorized stage 21 for imaging upon time-lapse observation.

When in step S115 it is determined that no observation position has been selected, the process of S116 is skipped, and the process proceeds to step S117.

When in step S115 it is determined that no observation position has been selected, or when an observation position is selected in step S116, the control unit 142 determines, in step S117, whether the confirm button 115 of the operating section 12 has been operated.

Specifically, the user selects several imaging positions for time-lapse observation, from among imaging positions specified by the plurality of registered observation positions, while looking at the observation monitor 16. When the user determines that all target imaging positions (observation positions) have been selected, the user operates the confirm button 115, to instruct registration of the final observation positions of the observation positions specified by the selected imaging positions. The operating section 12 supplies thereupon, to the control unit 142 a signal instructing registration, and the control unit 142 determines therefore that the confirm button 115 has been operated.

When in step S117 it is determined that the confirm button 115 is not operated, the process returns to step S113, and the above process is repeated.

By contrast, when in step S117 it is determined that the confirm button 115 has been operated, the control unit 142 registers in step S118, as final observation positions, the observation positions selected as candidates.

Specifically, the control unit 142 enables observation positions, selected as candidates in the processing of step S116, as observation positions for time-lapse observation, and supplies micro-images and observation position information of the observation positions, as well as a corresponding macro-image, to the recording unit 143, in order for the foregoing to be recorded. The control unit 142 supplies optionally observation position information, micro-images and a macro-image also to the personal computer 15, in order for the foregoing to be recorded. The observation position determination process ends once the observation positions for time-lapse observation are registered.

In the microscope 11, thus, a designation screen is displayed, and the observation positions corresponding to the imaging positions designated by the user are registered as final observation positions for time-lapse observation. The user can thus designate observation positions in a simple manner, by selecting imaging positions that are displayed on the designation screen.

Observation position registration may be carried out both when the sample 53 is observed by fluorescence observation or by bright field observation. Cultured cells, as the sample 53 to be observed, are easier to find in fluorescence observation, and hence fluorescence observation is appropriate for finding observation positions. The activation state of cultured cells can be verified under bright field observation, and hence bright field observation is appropriate for selecting final observation positions from among registered observation positions. As used herein, the term bright field observation includes, for instance, phase difference observation and differential interference observation.

Therefore, the sample 53 may be observed by fluorescence observation during observation of the entire sample 53 with a moving motorized stage 21, and may be observed by bright field observation upon final selection of observation positions for time-lapse observation, from among observation positions that are registered based on fluorescence observation.

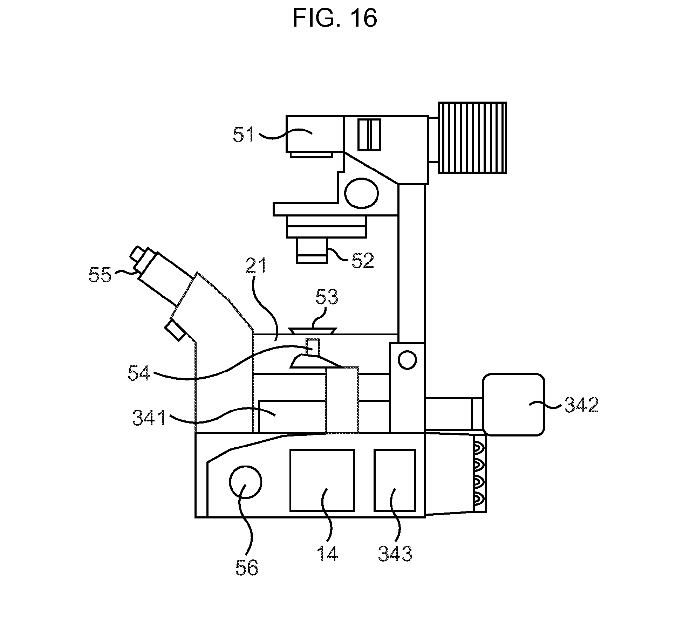

In that case, the controller 13 (microscope 11) registers and determines observation positions by switching between a fluorescence observation mode, in which the sample 53 is observed by fluorescence observation, and a bright field observation mode, in which the sample 53 is observed by bright field observation. In this case, the control unit 142 is connected to the microscope 11 that is now is provided with a fluorescence illumination device, for fluorescence observation, and with a mercury lamp and a camera, for instance as illustrated in Fig. 16. In Fig. 16, the portions corresponding to those of Fig. 2 are denoted with the same reference numerals, and an explanation thereof has been suitably omitted.

The microscope 11 illustrated in Fig. 16 comprises a fluorescence illumination device 341 used for fluorescence observation of the sample 53, as well as a mercury lamp 342 and a camera 343. The mercury lamp 342 emits excitation light for causing the sample 53 to emit fluorescent light. The fluorescence illumination device 341 is connected to the mercury lamp 342. The excitation light from the mercury lamp 342 is led to the objective lens 54 via an optical system provided inside the fluorescence illumination device 341.

The excitation light from the mercury lamp 342 passes through the objective lens 54 and the optical system of the fluorescence illumination device 341, and strikes the sample 53, whereupon the sample 53 emits fluorescent light. The fluorescent light passes through the objective lens 54 and the optical system, not shown, and strikes the camera 343 and the eyepiece lens 55. The camera 343 captures fluorescent light from the sample 53, and supplies the resulting captured image of the sample 53 to the personal computer 15 and to the control unit 142.

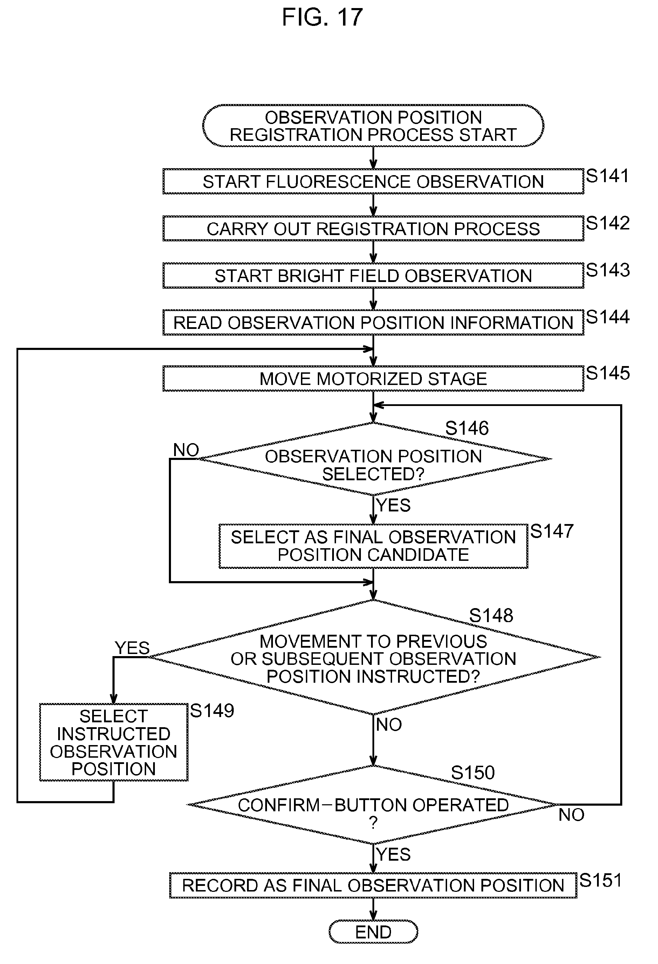

An explanation follows next, with reference to the flowchart of Fig. 17, on an observation position registration process in which the microscope 11 and the controller 13 of Fig. 16 carry out a registration and selection process of observation positions for time-lapse observation.

In step S141 the microscope 11 starts fluorescence observation of the sample 53. For instance, the control unit 142 selects a fluorescence observation mode as the mode in which the sample 53 is observed, and instructs the microscope 11 so that the sample 53 is observed in a fluorescence observation mode. The microscope 11 performs fluorescence observation of the sample 53 in accordance with the instruction from the control unit 142.

Specifically, the mercury lamp 342 emits excitation light. The excitation light from the mercury lamp 342 passes through the objective lens 54 and the optical system of the fluorescence illumination device 341, and strikes the sample 53, whereupon the latter emits fluorescent light. The fluorescent light generated by the sample 53 passes through the objective lens 54 and the optical system, not shown, and strikes the camera 343 and the eyepiece lens 55. The camera 343 captures fluorescent light from the sample 53, and supplies the captured image obtained as a result to the personal computer 15, for the image to be displayed.

The user can thus observe the sample 53 within the field of view of the microscope 11 by looking at the image displayed on the observation monitor 16. The user can also observe the sample 53 through the eyepiece lens 55.

The controller 13 carries out a registration process in step S142. This registration process is identical to the registration process explained with reference to Fig. 10, and hence a recurrent explanation thereof is omitted. Specifically, a process identical to that of step S11 to step S17 in Fig. 10 is carried out, and the position at which the motorized stage 21 is stopped for a reference time or longer is registered as an observation position, whereupon observation position information and stop time information are ordered and supplied to the recording unit 143, where they are recorded.

Once the observation position information is thus registered, the user operates next the personal computer 15 to instruct start of bright field observation, whereupon there is selected a final observation position for time-lapse observation, from among the registered observation positions. The personal computer 15 supplies, to the control unit 142 of the controller 13, a signal indicating start of bright field observation, and the control unit 142 sets therefore the observation mode to bright field observation mode, in accordance with that signal, and instructs the microscope 11 to start observation of the sample 53 by bright field observation.

In step S143, the microscope 11 starts bright field observation in accordance with the instruction from the control unit 142. Specifically, the illumination optical system 51 emits illumination light, and the lens 52 condenses the illumination light from the illumination optical system 51 and irradiates the condensed illumination light onto the sample 53. The illumination light, which is irradiated onto the sample 53, passes through the sample 53 and becomes observation light. The observation light passes through the optical objective lens 54 and the optical system, not shown, and strikes the camera 14 and the eyepiece lens 55. The camera 14 captures the observation light from the sample 53, and supplies the image obtained as a result to the personal computer 15, for the image to be displayed.

The user can thus observe the sample 53 within the field of view of the microscope 11, under bright field observation, by looking at the image displayed on the observation monitor 16. The user can also observe the sample 53, under bright field observation, through the eyepiece lens 55.

Upon start of bright field observation of the sample 53 as described above, the control unit 142 reads out, in step S144, observation position information and stop time information ordered and recorded in the recording unit 143. The control unit 142 selects an initially registered observation position, i.e. selects observation position information on that observation position, from among the observation positions indicated by the read observation position information.

In step S145, the stage control unit 144 causes the motorized stage 21 to move to an observation position selected by the control unit 142. Specifically, the control unit 142 instructs movement of the motorized stage 21 to the selected observation position. In accordance with that instruction, the stage control unit 144 controls the motorized stage 21, to cause the movable platform 82 of the motorized stage 21 to move to the instructed observation position.

As a result, the sample 53 can be observed within the field of view of the microscope 11 at the selected observation position, so that the user can check the state of the sample 53 while looking at the observation monitor 16. By operating the personal computer 15, the user can also select, as a final observation position where time-lapse observation is to be carried out, a selected observation position, i.e. the position of the sample 53 being observed within the field of view of the microscope 11.

The user operates the personal computer 15 to instruct selection of a final observation position, operates the stage position reproduction button 114 provided in the operating section 12 to cause the motorized stage 21 to move, and checks sequentially a previous or subsequent position of the sample 53 in the sequence.

In step S146 the control unit 142 determines whether an observation position has been selected. For instance, the user operates the personal computer 15 to select, as a final observation position of the motorized stage 21 where time-lapse observation is to be carried out, an observation position corresponding to the position of the sample 53 being currently observed within the field of view of the microscope 11. Thereupon, the personal computer 15 supplies to the control unit 142 a signal denoting the observation position selected by the user. Upon reception of this signal, the control unit 142 determines that an observation position has been selected.

When in step S146 it is determined that an observation position has been selected, the control unit 142 selects in step S147 an observation position, specified by the signal from the personal computer 15, as a final observation position candidate.

The user may also select an observation position at which time-lapse observation is to be carried out by operating the operating section 12. Also, the user may operate the personal computer 15 and/or the operating section 12 to allow instructing cancellation of a choice of an observation position as a position where time-lapse observation is carried out.

When in step S146 it is determined that no observation position has been selected, the process of S147 is skipped, and the process proceeds to step S148.

When no observation position is selected in step S146, or an observation position is selected in step S147, the control unit 142 determines, in step S148, whether movement of the motorized stage 21 to a previous or a subsequent observation position has been instructed or not, on the basis of a signal from the operating section 12.

The control unit 142 determines that movement has been instructed when, for instance, the user operates the stage position reproduction button 114 and the operating section 12 supplies a signal instructing the control unit 142 of the controller 13 to sequentially move the motorized stage 21 to previous or subsequent observation position.

When in step S148 it is determined that movement to a previous or subsequent observation position has been instructed, the control unit 142 selects, in step S149, observation position information of the observation position to which the user has instructed movement, from among the observation positions. After selection of a destination observation position, the process returns to step S145 and the above process is repeated.

By contrast, when in step S148 it is determined that movement has not been instructed, the control unit 142 determines in step S150 whether the confirm button 115 of the operating section 12 has been operated.

Specifically, the user selects several observation positions for time-lapse observation, from among the plurality of registered observation positions, while looking at the observation monitor 16. When the user determines that all target observation positions have been selected, he/she operates the confirm button 115, to instruct registration of the selected observation positions, as final observation positions. Thereupon, the operating section 12 supplies, to the control unit 142 a registration-instructing signal, and the control unit 142 determines therefore that the confirm button 115 has been operated.

When in step S150 it is determined that the confirm button 115 has not been operated, the process returns to step S146, and the above process is repeated.

When in step S150 it is determined that the confirm button 115 has been operated, the control unit 142 registers in step S151, as final observation positions, the observation positions selected as candidates.

Specifically, the control unit 142 enables an observation position, selected as a candidate in the processing of step S147, as an observation position for time-lapse observation, and supplies, to the recording unit 143, observation position information and stop time information on the observation positions. The control unit 142 supplies optionally observation position information and stop time information also to the personal computer 15, in order for the foregoing to be recorded. The observation position registration process ends once the final observation positions for time-lapse observation are registered.

Thus, final observation positions are registered during time-lapse observation through appropriate switching between a fluorescence observation mode and a bright field observation mode in the microscope 11 and the controller 13. Therefore, the user carries out the operation of finding out observation positions by observing the entire sample 53, and the operation of deciding final observation positions from registered observation positions while observing the sample on the basis of a more appropriate observation method. Observation positions that match better the observation purpose can be registered in a simple manner as a result.

In the above explanation, the registered observation positions are observed by bright field observation, and the user selects whether an observation position is a final observation position. However, there may also be selected observation positions at which the motorized stage 21 is stopped for a reference time or longer during bright field observation by the user at registered observation positions. Specifically, observation positions at which the motorized stage 21 is stopped for the reference time or longer during bright field observation are selected as final observation positions, from among registered observation positions.

There may also be selected as final observation positions, from among registered observation positions, those positions at which the motorized stage 21 is stopped for the reference time or longer during bright field observation, and at which the position of the objective lens 54 moves by a distance equal to or greater than Δz, within a predetermined lapse of time, during a period in which the motorized stage 21 is stopped.

The above series of processes can be executed by hardware or by software. In the case where the series of process is executed by software, the program that constitutes the software is installed, from a program recording medium, into for instance a computer having built-in dedicated hardware, or a general-purpose personal computer that is capable of executing various functions through installation of various programs.

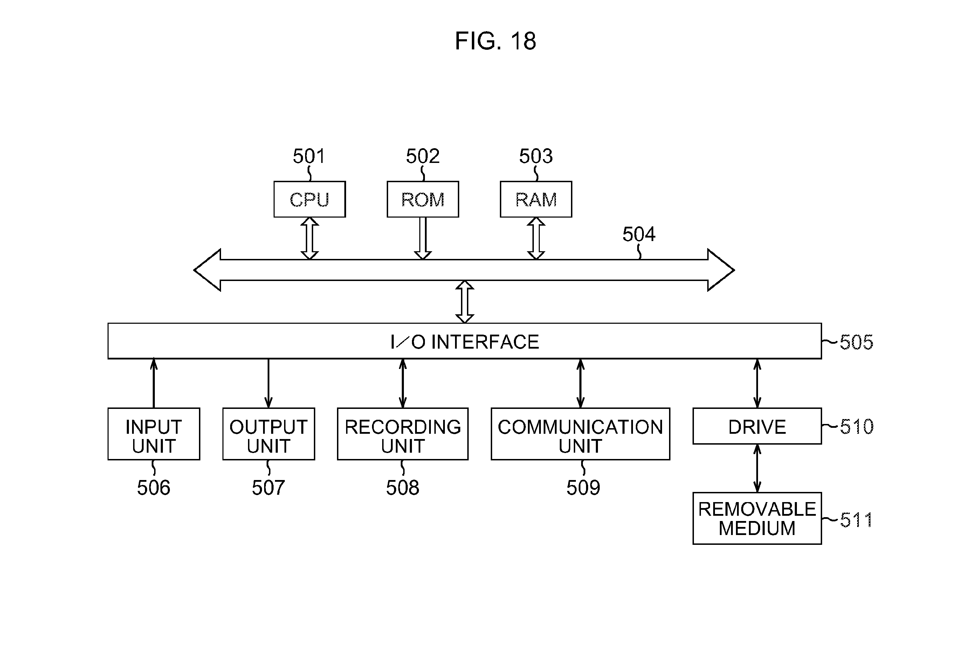

Fig. 18 is a block diagram illustrating a configuration example of the hardware of a computer in which the above-described series of processes are executed based on a program.

A CPU (Central Processing Unit) 501, an ROM (Read Only Memory) 502, and an RAM (Random Access Memory) 503 are connected to each other in a computer via a bus 504.

The bus 504 is further connected to an I/O interface 505. To the I/O interface 505 there are connected an input unit 506 comprising a keyboard, a mouse, a microphone or the like; an output unit 507 comprising a display, a speaker or the like, a recording unit 508 comprising a hard disk, a nonvolatile memory or the like; a communication unit 509 comprising a network interface or the like; and a drive 510 that drives a removable medium 511 such as a magnetic disk, an optical disk, a magneto-optical disk or a semiconductor memory.

In a computer having the above configuration, the CPU 501 carries out the above-described series of processes by, for instance, executing the program recorded in the recording unit 508 through loading of the program to the RAM 503 via the I/O interface 505 and the bus 504.

The program executed by the computer (CPU 501) is recorded in the removable medium 511, which is an instance of package media and which may be, for example, a magnetic disk (such as a flexible disk), an optical disk such as CD-ROM (Compact Disc-Read Only Memory) or DVD (Digital Versatile Disc), a magneto-optical disk or a semiconductor memory. Alternatively, the program may be provided via wired or wireless transmission media, such as a local area network, the Internet, or a digital satellite broadcast.

The program can be installed in the recording unit 508, via the I/O interface 505, by fitting the removable media 511 into the drive 510. The program can also be installed in the recording unit 508 by being received by the communication unit 509, via a wired or wireless transmission medium. Alternatively, the program may be installed beforehand in the ROM 502 or the recording unit 508.

The program executed in the computer may be a program that executes a process in a time sequence that follows the sequence explained in the present specification, or a program that executes the process in parallel, or at a required timing when called.

The embodiments of the present invention are not limited to the above-described embodiments, and may be modified in various ways without departing from the scope of the invention.

## Claims

1. A microscope device, comprising:
an external operating member that enables external operation;
movement control means for controlling movement of a stage on which a sample to be observed is disposed, in accordance with a command from the external operating member;
acquisition means for monitoring the movement of the stage by the movement control means and for, when the stage moves neither in a first direction nor a second direction perpendicular to the first direction for a reference time or longer, acquiring position information denoting a position at which the stage does not move for the reference time or longer;
recording means for recording the acquired position information; and
imaging means for carrying out, on the basis of the position information recorded by the recording means, time-lapse imaging through the movement of the stage by the movement control means and through repeated imaging of the sample.

2. The microscope device according to claim 1, further comprising setting means for setting the reference time, wherein
the recording means records the position information, and further records stop time information denoting a stop time at which the stage moves neither in the first direction nor the second direction at a position indicated by the position information, and
when the reference time is reset by the setting means, the acquisition means selects, from among pieces of the position information, position information of a position at which a stop time indicated by the stop time information is equal to or longer than the reset reference time.

3. The microscope device according to claim 1, wherein the movement control means further causes the stage to move to a respective position indicated by a plurality of pieces of the position information recorded by the recording means.

4. The microscope device according to claim 3, further comprising reproduction means for reproducing an image acquired by the imaging means, wherein
the acquisition means selects the position information instructed by a user from among a plurality of pieces of the position information, while the reproduction means reproduces the image.

5. The microscope device according to claim 4, further comprising observation mode switching means for switching between a fluorescence observation mode and a bright field observation mode, as observation methods of the sample, wherein
the acquisition means carries out an acquisition operation based on the position information during the fluorescence observation mode, and
during the bright field observation mode, the reproduction means reproduces the image that is imaged at a position specified by the position information, and the acquisition means selects the position information designated by the user, from among a plurality of pieces of the acquired position information, as the position information denoting a position of the stage when performing the time-lapse imaging.

6. The microscope device according to claim 1, further comprising display control means for controlling display of the image that is imaged by the imaging means, wherein
the imaging means acquires a macro-image, which is an image of the entire sample,
the display control means controls display of the macro-image in which there is displayed information denoting an imaging position when performing the time-lapse imaging, at a position specified by the position information, on the basis of the position information and the macro-image, and
the acquisition means selects the position information, specified by a user and corresponding to information denoting the imaging position on the macro-image, as the position information denoting a position of the stage when performing the time-lapse imaging, from among a plurality of pieces of the acquired position information.

7. The microscope device according to claim 1, wherein the movement control means further controls the movement of the stage or the objective lens in a third direction that is parallel to an optical axis of an objective lens;
the acquisition means acquires, as the position information, information denoting a position of the stage in the first direction and a position of the stage in the second direction when the stage moves neither in the first direction nor the second direction for the reference time or longer, and when, in a period in which the stage is not moved, the stage or the objective lens moves in the third direction by a distance equal to or greater than a predetermined distance, within a predetermined time.

8. A program for causing a computer to execute processing that comprises the steps of:
controlling movement of a stage, on which a sample to be observed is disposed, in accordance with a command of an external operating member that enables external operation;
monitoring the movement of the stage and, when the stage moves neither in a first direction nor a second direction perpendicular to the first direction for a reference time or longer, and acquiring position information denoting a position of the stage that does not move for the reference time or longer;
recording the acquired position information; and
carrying out, on the basis of the recorded position information, time-lapse imaging through the movement of the stage and through repeated imaging of the sample.

9. A microscope device, comprising:
an external operating member that enables external operation;
movement control means for controlling a scanning member that, through the external operating member, moves an observation region of a sample to be observed;
acquisition means for monitoring the movement of the scanning member by the movement control means, and acquiring position information denoting a position of the scanning member when the scanning member does not move for a reference time or longer;
recording means for recording the acquired position information; and
time-lapse imaging means for carrying out, on the basis of the position information recorded by the recording means, imaging through movement of the scanning member by the movement control means and through repeated imaging of the observation region.

10. The microscope device according to claim 9, wherein the scanning member comprises a microscope stage, or a scanning mirror of a confocal head.
